# EUROPEAN PATENT SPECIFICATION

(11) **EP 3 039 659 B1**
(45) Date of publication and mention of the grant of the patent: **08.06.2022**
(21) Application number: 14839945.4
(22) Date of filing: 29.08.2014
(51) Int. Cl.: G08B 3/00, H04M 1/02, H04N 7/18, H04M 11/02

(54) **DOORBELL COMMUNICATION SYSTEMS AND METHODS**
TÜRGLOCKENKOMMUNIKATIONSSYSTEME UND -VERFAHREN
SYSTÈMES ET PROCÉDÉS DE COMMUNICATION PAR L'INTERMÉDIAIRE D'UNE SONNETTE DE PORTE

(30) Priority: 30.08.2013 US 201361872439 P; 06.12.2013 US 201314098772; 06.12.2013 US 201314099888; 28.12.2013 US 201314142839; 12.05.2014 US 201414275811; 11.08.2014 US 201462035646 P; 19.08.2014 US 201414463548
(43) Date of publication of application: 06.07.2016
(73) Proprietor: Skybell Technologies, Inc., Irvine, CA 92618 (US)
(72) Inventor: SCALISI, Joseph Frank, Irvine, CA 92618 (US); MEJIA, Desiree, Irvine, CA 92618 (US); HARRISON, Gregory Saul, Irvine, CA 92618 (US); THOMAS, Andrew Paul, Irvine, CA 92618 (US); KASMIR, Seton Paul, Irvine, CA 92618 (US)
(74) Representative: Forrest, Stuart
(86) International application number: PCT/US2014/053506
(87) International publication number: WO 2015/031812

(56) References cited:
- WO-A1-2015/013275
- WO-A2-2007/111802
- DE-A1-102011 055 741
- US-A- 5 428 388
- US-A- 5 521 578
- US-A1- 2003 025 599
- US-A1- 2004 085 205
- US-A1- 2004 085 449
- US-A1- 2005 007 451
- US-A1- 2005 248 443
- US-A1- 2006 271 678
- US-A1- 2010 195 810
- US-A1- 2011 090 068
- US-A1- 2011 207 509
- US-A1- 2012 044 049
- US-A1- 2012 108 215
- US-A1- 2013 136 033
- US-A1- 2013 173 477

## Description

### BACKGROUND

### Field

Various embodiments disclosed herein relate to devices that enable remotely located individuals to communicate. Certain embodiments relate to communication between a person near an entry point such as a doorway and a person in another location.

### Description of Related Art

Homes, offices, and other buildings sometimes include communication and surveillance systems to enable friendly visitors to summon occupants of the buildings and to deter unwanted visitors. Communication and surveillance systems can include video cameras and doorbells.

Doorbells can enable a person located outside of an entry point, such as a door, to alert a person inside of an entry point that someone outside would like to talk to someone inside. Doorbells sometimes include a button located near a door, such as a front door, side door, or back door of a home, office, dwelling, warehouse, building, or structure. Doorbells are sometimes used near a gate or some other entrance to a partially enclosed area. Pushing the doorbell sometimes causes a chime or other alerting sound to be emitted. In some cases, this alerting sound can typically be heard within a short distance from the entry point or sound source. For example, a homeowner located remotely from her home likely would not be able to hear the alerting sound, and thus, would not be aware that someone is ringing her doorbell. Thus, there is a need for devices and methods to alert remotely located individuals that someone seeks the attention of the homeowner, tenant, building guardian, or steward.

DE102011055741 discloses a communication apparatus which has a link assembly for setting a speech and/or video communication link with another communication apparatus and a terminal circuitry, over which the former communication apparatus is connected with a chime.

US2011090068 discloses a peripheral load driver that utilizes the power, wiring, and primary load of a conventional doorbell system to drive a doorbell system peripheral load at a higher current without risk of inadvertently energizing the primary load of the conventional doorbell system.

WO2015013275, published 29th January 2015, discloses methods which can include using a doorbell to wirelessly communicate with a remotely located computing device.

### SUMMARY

In some embodiments, the disclosure describes doorbell systems comprising an electronic doorbell and a remotely located computing device. The doorbell can include a camera, a speaker, and a microphone. The remotely located computing device can include a display screen to show images taken by the camera of the doorbell. The doorbell is electrically coupled to a chime.

In examples useful for understanding the invention, but not being part of the invention, disclosed methods comprise obtaining the doorbell that comprises a speaker, a microphone, and a camera, wherein the doorbell is configurable for mounting near an entryway; entering a sleep mode, wherein the sleep mode consumes less power than a standby mode and wherein wireless communication, the camera, and the microphone are disabled during the sleep mode; exiting the sleep mode and entering the standby mode in response to detecting a first indication of a visitor, wherein the first indication is detected using the doorbell, the standby mode consumes less power than an alert mode, and the standby mode increases electrical activities of the camera and the microphone relative to the sleep mode; and entering the alert mode in response to detecting a second indication of the visitor, wherein the second indication is detected using the doorbell, and the doorbell records an image using the camera during the alert mode and the wireless communication is enabled during the alert mode to send an alert to the remotely located computing device, wherein detecting the first indication comprises detecting a signal indicative of the visitor above a first threshold and detecting the second indication comprises detecting the signal indicative of the visitor above a second threshold, wherein the second threshold is greater than the first threshold, and wherein the doorbell comprises a first sensor, and the signal indicative of the visitor is sensed by the first sensor of the doorbell, wherein the first sensor of the doorbell comprises a proximity sensor and the signal is related to proximity of the visitor, and wherein the method further comprises shipping the doorbell in a shipping mode that consumes power, wherein during the shipping mode the doorbell is configured to detect whether the doorbell is electrically coupled to an external power source, and then entering the sleep mode in response to detecting electricity from the external power source, wherein the shipping mode consumes less power than the sleep mode.

In examples useful for understanding the invention, but not being part of the invention. the disclosure describes methods for using a doorbell that is configurable to wirelessly communicate with a remotely located computing device. The method comprising obtaining the doorbell that comprises a speaker, a microphone, a camera, and a button, wherein the button is configurable to enable a visitor to sound a chime; shipping the doorbell in a shipping mode that consumes power, wherein during the shipping mode the doorbell is configured to detect whether the doorbell is electrically coupled to an external power source, and then entering a sleep mode in response to detecting electricity from the external power source, wherein the shipping mode consumes less power than the sleep mode; entering the sleep mode, wherein the sleep mode consumes less power than an alert mode and wherein wireless communication is off during the sleep mode; and entering the alert mode in response to detecting a first indication of the visitor, wherein the first indication is detected using the doorbell, and the doorbell records an image using the camera during the alert mode.

In examples useful for understanding the invention, but not being part of the invention, the disclosure describes a method for using a doorbell system capable of allowing and blocking a doorbell communication request. The method comprises obtaining a doorbell that comprises a speaker, a microphone, and a camera, wherein the doorbell is configurable for mounting near an entryway; assigning a first priority to a first remote computing device and assigning a second priority to a second remote computing device, wherein the first priority is superior to the second priority; using the doorbell to detect a visitor; generating the doorbell communication request regarding the visitor; sending the doorbell communication request to the first remote computing device due to the first priority; detecting a location of the second remote computing device; and blocking the second remote computing device from displaying the doorbell communication request, wherein the doorbell system blocks displaying the doorbell communication request in response to the location of the second remote computing device.

In examples useful for understanding the invention, but not being part of the invention, the disclosure describes a method for using a doorbell system. The method comprises obtaining a doorbell that comprises a speaker, a microphone, and a camera, wherein the doorbell is configurable for mounting near an entryway; assigning a first priority to a first remote computing device and assigning a second priority to a second remote computing device, wherein the first priority is superior to the second priority; using the doorbell to detect a visitor; generating a doorbell communication request regarding the visitor; sending the doorbell communication request to the first remote computing device due to the first priority; blocking the doorbell communication request from being accepted by the second remote computing device due to a profile associated with the second remote computing device, wherein the profile comprises restrictions that prohibit the second remote computing device from accepting the doorbell communication request; detecting a location of the second remote computing device; and blocking the second remote computing device from displaying the doorbell communication request, wherein the doorbell system blocks displaying the doorbell communication request in response to the location of the second remote computing device.

In examples useful for understanding the invention, but not being part of the invention, the disclosure describes a method for using a doorbell system configured to block or allow a doorbell communication request. The method comprises obtaining a doorbell that comprises a speaker, a microphone, and a camera, wherein the doorbell is configurable for mounting near an entryway; using the doorbell to detect a visitor; generating the doorbell communication request regarding the visitor; detecting a location of the first remote computing device; and blocking the first remote computing device from displaying the doorbell communication request, wherein the doorbell system blocks displaying the doorbell communication request in response to the location of the first remote computing device.

In examples useful for understanding the invention, but not being part of the inversion, the disclosure describes a method for using a doorbell system. The method comprises obtaining a doorbell that comprises a speaker, a microphone, a camera, and an outer housing; connecting the doorbell electrically to an electrical power supply of a building; connecting the doorbell electrically to a sound output device located inside of the building; connecting the doorbell communicatively to a remote computing device; receiving a first alternating current into the doorbell from the power supply of the building; converting at least a first portion of the first alternating current into a first direct current, wherein the converting occurs within the outer housing of the doorbell; using the first direct current to provide a first electrical energy to the camera; draining the first direct current to the sound output device located inside of the building, wherein the first direct current provides a first electrical power that is less than a triggering threshold of the sound output device such that the sound output device does not emit a notification sound in response to the first electrical power, while draining the first direct current to the sound output device such that first direct current provides the first electrical power that is less than the triggering threshold, detecting the presence of a visitor that is located outside of the building to which the doorbell is attached; then after the detecting step, using the doorbell to supply a second electrical power to the sound output device, wherein the second electrical power is greater than the triggering threshold of the sound output device such that the sound output device emits the notification sound in response to the second electrical power; while using the doorbell to supply the second electrical power to the sound output device, initiating a transmission of a notification to the remote computing device to notify a user of the visitor's presence; then after transmitting the notification to the remote computing device, using the doorbell to supply the first electrical power to the sound output device such that the sound output device does not emit a notification sound in response to the first electrical power; and while using the doorbell to supply the first electrical power to the sound output device, continuing to transmit the notification to the remote computing device to notify the user of the visitor's presence.

In examples useful for understanding the invention, but not being part of the invention, the disclosure describes a method for replacing a first doorbell with a second doorbell, wherein the first doorbell comprises a switch configured to close a circuit between a transformer and a sound output device to enable the sound output device to emit a notification sound. The method comprises detaching the first doorbell from a first wire that is electrically connected to the transformer; detaching the first doorbell from a second wire that is electrically connected to the sound output device; obtaining the second doorbell, wherein the second doorbell comprises a speaker, a microphone, a camera, and an outer housing, wherein the speaker, the microphone, and the camera are coupled to the outer housing; connecting the second doorbell electrically to the first wire that is electrically connected to the transformer; connecting the second doorbell electrically to the second wire that is electrically connected to the sound output device; connecting the second doorbell communicatively to a remote computing device; receiving a first alternating current into the second doorbell from at least one of the first wire and the second wire; converting at least a first portion of the first alternating current into a first direct current, wherein the converting occurs within the outer housing of the second doorbell; using the first direct current to provide a first electrical energy to at least a second portion of the second doorbell; draining the first direct current to at least one of the first wire and the second wire; arranging and configuring the second doorbell to detect the presence of a visitor located outside of the building to which the doorbell is attached; and arranging and configuring the second doorbell to simultaneously transmit a first notification to a remote computing device to notify a user of the visitor's presence, wherein during the transmission of the first notification the doorbell supplies the sound output device with a first electrical power that is less than a triggering threshold of the sound output device such that the sound output device does not emit a notification sound in response to the first electrical power; and transmit a second notification to the sound output device located inside of the building to notify a user of the visitor's presence, wherein the second notification comprises supplying the sound output device with a second electrical power that is greater than the triggering threshold of the sound output device such that the sound output device emits the notification sound in response to the second electrical power.

In examples useful for understanding the invention, but not being part of the invention, the disclosure describes a method for using a doorbell system. The method comprises obtaining a doorbell that comprises a speaker, a microphone, a camera, and an outer housing, wherein the speaker, the microphone, and the camera are coupled to the outer housing of the doorbell; connecting the doorbell electrically to an electrical power supply of a building; connecting the doorbell electrically to a sound output device located inside of the building; connecting the doorbell communicatively to a remote computing device; receiving a first alternating current into the doorbell from the power supply of the building; converting at least a first portion of the first alternating current into a first direct current, wherein the converting occurs within the outer housing of the doorbell; using the first direct current to provide a first electrical energy to the camera; draining the first direct current to the sound output device located inside of the building, wherein the first direct current provides a first electrical power that is less than a triggering threshold of the sound output device such that the sound output device does not emit a notification sound in response to the first electrical power; detecting the presence of a visitor that is located outside of the building to which the doorbell is attached; and in response to detecting the presence of the visitor, transmitting a first notification to the remote computing device to alert a first user of the visitor's presence, wherein during the transmission of the first notification the doorbell supplies the sound output device with the first electrical power; and transmitting a second notification to the sound output device located inside of the building to alert a second user of the visitor's presence, wherein the second notification comprises supplying the sound output device with a second electrical power that is greater than the triggering threshold of the sound output device such that the sound output device emits the notification sound in response to the second electrical power.

In examples useful for understanding the invention, but not being part of the invention, the disclosure describes a method for using a doorbell that is configurable to wirelessly communicate with a remotely located computing device. The method comprises obtaining the doorbell that comprises a speaker, a microphone, a camera, and a button, wherein the doorbell is configurable to enable a visitor to sound a chime; entering a setup mode, wherein the setup mode comprises a network connection mode, and the method comprises entering the network connection mode in response to pressing the button for at least a predetermined amount of time, and the network connection mode comprises detecting a first wireless network and inputting a doorbell identification code into the remotely located computing device, wherein the doorbell identification code is associated with the doorbell, and wherein the network connection mode further comprises using the doorbell identification code to verify whether the remotely located computing device is authorized to communicate with the doorbell, wherein the network connection mode comprises enabling communication from the remotely located computing device to the doorbell in response to pressing the button for at least the predetermined amount of time and inputting the doorbell identification code into the remotely located computing device, wherein the remotely located computing device is connected to the first wireless network such that the remotely located computing device is configured to transmit data via the first wireless network, wherein the first wireless network comprises a name and a password, and wherein the communication from the remotely located computing device to the doorbell comprises the name and the password of the first wireless network to which the remotely located computing device is connected; and detecting a first indication of the visitor, wherein the first indication is detected using the doorbell. The predetermined may be amount of time eight seconds.

In examples useful for understanding the invention, but not being part of the invention, the disclosure describes a method for using a doorbell that is configurable to wirelessly communicate with a remotely located computing device. The method comprises obtaining the doorbell that comprises a speaker, a microphone, a camera, and a button, wherein the doorbell is configurable to enable a visitor to sound a chime; shipping the doorbell in a shipping mode that consumes electrical energy from the doorbell, wherein during the shipping mode the doorbell is configured to detect whether the doorbell is electrically coupled to an external power source, and then entering a standby mode in response to detecting electricity from the external power source, wherein the shipping mode consumes less electrical power than the standby mode and wherein the speaker and the microphone are disabled during the standby mode; exiting the standby mode and entering an alert mode in response to detecting a first indication of the visitor, wherein the first indication is detected using the doorbell; sending a wireless notification to the remotely located computing device regarding a presence of the visitor in response to entering the alert mode; and entering a network connection mode prior to sending the wireless notification, wherein the network connection mode comprises detecting a first wireless network having a name and a password, and the network connection mode comprises inputting a doorbell identification code into the remotely located computing device, wherein the doorbell identification code is associated with the doorbell, and wherein the network connection mode further comprises using the doorbell identification code to verify whether the remotely located computing device is authorized to communicate with the doorbell, wherein the network connection mode comprises the remotely located computing device creating a second wireless network, and the network connection mode comprises transmitting the name and the password of the first wireless network directly from the remotely located computing device to the doorbell via the second wireless network to enable the doorbell to communicate with the remotely located computing device via the first wireless network, wherein the method comprises the doorbell directly communicating with the remotely located computing device via the second wireless network prior to the doorbell indirectly communicating with the remotely located computing device via the first wireless network.

In examples useful for understanding the invention, but not being part of the invention, the disclosure describes a method for using a doorbell that is configurable to wirelessly communicate with a remotely located computing device. The method comprises obtaining the doorbell that comprises a speaker, a microphone, a camera, and a button, wherein the doorbell is configurable to enable a visitor to sound a chime; sending a wireless notification to the remotely located computing device regarding a presence of the visitor in response to the doorbell detecting the visitor; and entering a network connection mode prior to sending the wireless notification, wherein the network connection mode comprises detecting a first wireless network having a name and a password, and the network connection mode comprises inputting a doorbell identification code into the remotely located computing device, wherein the doorbell identification code is associated with the doorbell, and wherein the network connection mode further comprises using the doorbell identification code to verify whether the remotely located computing device is authorized to communicate with the doorbell, wherein the network connection mode comprises the remotely located computing device creating a second wireless network, and the network connection mode comprises transmitting the name and the password of the first wireless network directly from the remotely located computing device to the doorbell via the second wireless network to enable the doorbell to communicate with the remotely located computing device via the first wireless network, wherein the method comprises the doorbell directly communicating with the remotely located computing device via the second wireless network prior to the doorbell indirectly communicating with the remotely located computing device via the first wireless network.

In an aspect, the disclosure describes a doorbell system according to claim 1.

The disclosure also describes another aspect of a doorbell system. The doorbell system comprises an electronic doorbell comprising a camera and a button, wherein the camera is configurable to visually detect a visitor and the button is configurable to enable the visitor to sound an electronic chime; a printed circuit board electrically coupled to the electronic doorbell and a transformer; and an electronic chime electrically coupled to the printed circuit board and mechanically coupled to the printed circuit board, wherein the electronic chime comprises a speaker configurable to emit a notification sound in response to the visitor pressing the button of the electronic doorbell, wherein the printed circuit board is configured to block a first electricity that is less than a first threshold from entering the electronic chime, wherein the first electricity does not cause the electronic chime to emit the notification sound, and wherein the printed circuit board is configured to allow the first electricity to pass through the printed circuit board.

In examples useful for understanding the invention, but not being part of the invention, the disclosure describes a method for using a doorbell system, wherein the doorbell system comprises an electronic doorbell, an electronic chime, and a remote computing device. The method comprises obtaining the electronic doorbell that comprises a camera and a button, wherein the button is configurable to enable a visitor to sound an electronic chime, wherein the electronic chime comprises a speaker configurable to emit a notification sound in response to the visitor pressing the button of the electronic doorbell; electrically coupling an electronic switch assembly to the electronic chime; electrically coupling the electronic doorbell to the electronic switch assembly; configuring the electronic switch assembly so that a first electricity that is less than a first threshold passes through the electronic switch assembly without entering the electronic chime, wherein the first electricity does not cause the electronic chime to emit the notification sound, wherein the electronic switch assembly blocks the first electricity from passing through the electronic chime in response to the first electricity being less than the first threshold; and configuring the electronic switch assembly so that the electronic switch assembly causes a second electricity that is greater than the first threshold to pass through the electronic chime to cause the electronic chime to emit the notification sound, wherein the electronic switch assembly causes the second electricity to pass through the electronic chime in response to the second electricity being greater than the first threshold.

In examples useful for understanding the invention, but not being part of the invention, the disclosure describes a method for using a doorbell system, wherein the doorbell system comprises an electronic doorbell, an electronic chime, and a remote computing device. The method comprises obtaining the electronic doorbell that comprises a camera and a button, wherein the button is configurable to enable a visitor to sound an electronic chime, wherein the electronic chime comprises a speaker configurable to emit a notification sound in response to the visitor pressing the button of the electronic doorbell; mechanically coupling a printed circuit board to the electronic chime and electrically coupling the printed circuit board to the electronic chime; electrically coupling the electronic doorbell to the printed circuit board; configuring the printed circuit board so that the printed circuit board allows a first electricity to pass through the printed circuit board in response to the first electricity being less than a first threshold; and configuring the printed circuit board so that the printed circuit board blocks the first electricity from entering the electronic chime in response to the first electricity being less than the first threshold, wherein the first electricity does not cause the electronic chime to emit the notification sound.

In examples useful for understanding the invention, but not being part of the invention, the disclosure describes a method for using a doorbell system, wherein the doorbell system comprises an electronic doorbell, an electronic chime, and a remote computing device. The method comprises obtaining the electronic doorbell that comprises a camera and a button, wherein the button is configurable to enable a visitor to sound an electronic chime, wherein the electronic chime comprises a speaker configurable to emit a notification sound in response to the visitor pressing the button of the electronic doorbell; mechanically coupling a printed circuit board to the electronic chime and electrically coupling the printed circuit board to the electronic chime; electrically coupling the electronic doorbell to the printed circuit board; and configuring the electronic switch assembly so that the electronic switch assembly causes a second electricity that is greater than the first threshold to pass through the electronic chime to cause the electronic chime to emit the notification sound, wherein the electronic switch assembly causes the second electricity to pass through the electronic chime in response to the second electricity being greater than the first threshold.

In examples useful for understanding the invention, but not being part of the invention, the disclosure describes a method for using a doorbell system to detect a first visitor, wherein the doorbell system comprises a doorbell and a remote computing device. The method comprises obtaining the doorbell that comprises a camera and a button, wherein the button is configurable to enable the first visitor to sound a chime; configuring the camera of the doorbell such that the camera comprises a field of view; using the camera of the doorbell to take a first image; sending the first image from the doorbell to the remote computing device, wherein the remote computing device comprises an electronic display; displaying the first image on the electronic display of the remote computing device; and prompting a user of the remote computing device to select a first detection zone within the first image, wherein the first detection zone comprises a portion of the first image.

In examples useful for understanding the invention, but not being part of the invention, the disclosure describes a method for using a doorbell system to detect a first visitor, wherein the doorbell system comprises a doorbell and a remote computing device. The method comprises obtaining the doorbell that comprises a camera and a button, wherein the button is configurable to enable the first visitor to sound a chime; configuring the camera of the doorbell such that the camera comprises a field of view; using the camera of the doorbell to take a first image to calibrate the doorbell system; sending the first image from the doorbell to the remote computing device, wherein the remote computing device comprises an electronic display; displaying the first image on the electronic display of the remote computing device; prompting a user of the remote computing device to select a first detection zone within the first image, wherein the first detection zone comprises a portion of the first image; configuring the doorbell system to ignore a second visitor located within the field of view but located outside of the first detection zone, wherein ignoring the second visitor comprises not sending a first picture of the second visitor to the remote computing device; and configuring the doorbell system to send a second picture of a third visitor to the remote computing device in response to determining that the third visitor is located inside of the first detection zone as defined based on the first image.

In examples useful for understanding the invention, but not being part of the invention, the disclosure describes a method for using a doorbell system to detect a first visitor, wherein the doorbell system comprises a doorbell and a remote computing device. The method comprises obtaining the doorbell that comprises a camera and a button, wherein the button is configurable to enable the first visitor to sound a chime; configuring the camera of the doorbell such that the camera comprises a field of view; using the camera of the doorbell to take a first image to calibrate the doorbell system by establishing a baseline of an entryway; sending the first image from the doorbell to the remote computing device, wherein the remote computing device comprises an electronic display; displaying the first image on the electronic display of the remote computing device; selecting a first detection zone within the first image, wherein the first detection zone comprises a portion of the first image, and wherein the first detection zone comprises a two-dimensional representation of an area in which the doorbell system is configured to respond to motion detection; configuring the doorbell system to ignore a second visitor located within the field of view but located outside of the first detection zone, wherein ignoring the second visitor comprises not sending a first picture of the second visitor to the remote computing device; and configuring the doorbell system to send a second picture of a third visitor to the remote computing device in response to determining that the third visitor is located inside of the first detection zone.

The embodiments described above include many optional features and aspects. Features and aspects of the embodiments can be combined.

### BRIEF DESCRIPTION OF THE DRAWINGS

These and other features, aspects, and advantages are described below with reference to the drawings, which are intended to illustrate, but not to limit, the invention. In the drawings, like reference characters denote corresponding features consistently Any figures falling outside of the scope of the claims are included as useful figures throughout similar embodiments.for understanding the invention, the scope of which is defined by the claims.. doorbell
Figure 1 illustrates a front view of a system, according to some embodiments.
Figure 2 illustrates a computing device running software, for use in a doorbell system according to some embodiments.
Figure 3 illustrates a security system is connected to a building, and comprises a doorbell system acording to some embodiments.
Figure 4 illustrates a communication system that includes a security system, a doorbell button, a wireless router, a server, and users, for use in a doorbell system according to some embodiments.
Figure 5 illustrates a diagrammatic view of an electrical power configuration, for use in a doorbell system according to some embodiments.
Figure 6 illustrates a diagrammatic view of a security system configured to wirelessly communicate with a sound output device, for use in a doorbell system according to some embodiments.
Figure 7 illustrates a communication system with two wireless networks, for use in a doobell system according to some embodiments.
Figures 8-9 illustrate methods of using a security system . These figures are useful for understanding the invention, but do not form part of the claimed invention.
Figure 10 illustrates methods of using a security system . This figure is useful for understanding the invention, but does not form part of the claimed invention.
Figure 11 illustrates a schematic view of a doorbell system, according to some embodiments.
Figure 12 illustrates a schematic view of the doorbell system from Figure 4 with a switch assembly in a first state, according to some embodiments.
Figure 13 illustrates a schematic view of the doorbell system from Figure 4 with the switch assembly in a second state, according to some embodiments.
Figure 14 illustrates a schematic view of a doorbell system, according to some embodiments.
Figure 15 illustrates a schematic view of the switch assembly from Figure 7 with the switch assembly in a first state. This figure is useful for understanding the invention.
Figure 16 illustrates a schematic view of the switch assembly from Figure 7 with the switch assembly in a second state . This figure is useful for understanding the invention.
Figure 17 illustrates a schematic view of a doorbell system This figure is useful for understanding the invention.
Figure 18 illustrates a schematic view of the switch assembly from Figure 10 with the switch assembly in a first state. This figure is useful for understanding the invention.
Figure 19 illustrates a schematic view of the switch assembly from Figure 10 with the switch assembly in a second state. This figure is useful for understanding the invention. for use in a doorbell system
Figure 20 illustrates an electronic switch assembly, for use in a doorbell system according to some embodiments.
Figures 21-23 illustrate flow-charts of various methods of using a doorbell system. This figure is useful for understanding the invention.
Figures 24-25 illustrate diagrammatic views of a camera's field of view, according to some embodiments.
Figure 26 illustrates a front view of a remote computing device displaying a grid pattern on an image taken by a camera of a doorbell, for use in a doorbell system according to some embodiments.
Figure 27 illustrates a front view of a remote computing device displaying a grid pattern on which sections have been selected to be part of a detection zone, for use in a doorbell system according to some embodiments
Figure 28 illustrates a front view of a remote computing device displaying a visitor partially located inside of a detection zone, for use in a doorbell system according to some embodiments.
Figure 29 illustrates a diagrammatic view of a doorbell system, according to some embodiments.

### DETAILED DESCRIPTION

For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

### HIGH-LEVEL OVERVIEW

Communication systems can provide a secure and convenient way for a remotely located individual to communicate with a person who is approaching a sensor, such as a proximity sensor or motion sensor, or with a person who rings a doorbell, which can be located in a doorway, near an entrance, or within 15 feet of a door. Some communication systems allow an individual to hear, see, and talk with visitors who approach at least a portion of the communication system and/or press a button, such as a doorbell's button. For example, communication systems can use a computing device to enable a remotely located person to see, hear, and/or talk with visitors. Remotely located computing devices can include computers, laptops, tablets, mobile devices, smartphones, cellular phones, and wireless devices (e.g., cars with wireless communication). Example computing devices include the iPhone, iPad, iMac, MacBook Air, and MacBook Pro made by Apple Inc. Communication between a remotely located person and a visitor can occur via the Internet, cellular networks, telecommunication networks, and wireless networks.

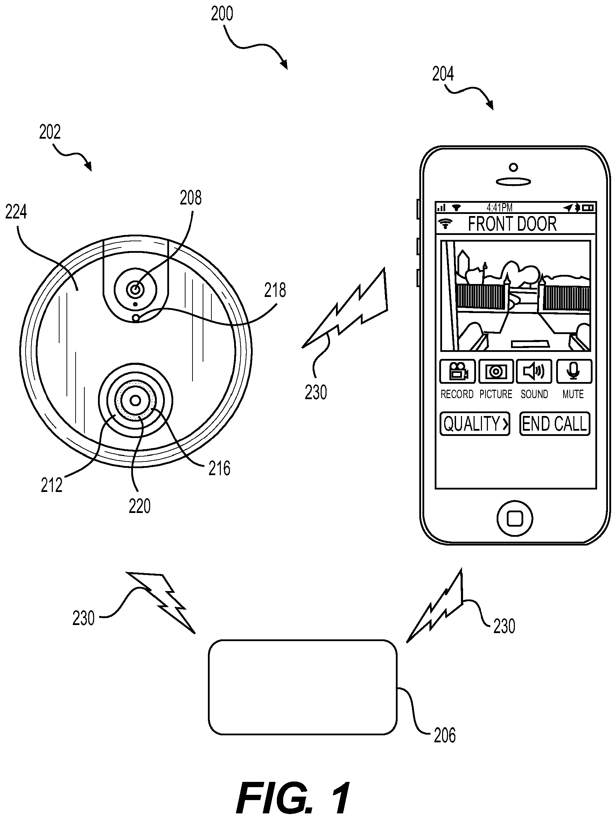

Figure 1 illustrates a front view of a doorbell system embodiment. The communication system 200 includes a security system 202 (a doorbell) and a computing device 204. Although the illustrated security system 202 includes many components in one housing, several security system embodiments include components in separate housings. The security system 202 includes a camera assembly 208 and a doorbell button 212. The camera assembly 208 can be a video camera, which in some embodiments is a webcam. The security system 202 can include a diagnostic light 216 and a power indicator light 220. In some embodiments, the diagnostic light 216 is a first color (e.g., blue) if the security system 202 and/or the communication system 200 is connected to a wireless Internet network and is a second color (e.g., red) if the security system 202 and/or the communication system 200 is not connected to a wireless Internet network. In some embodiments, the power indicator 220 is a first color if the security system 202 is connected to a power source. The power source can be power supplied by the building to which the security system 202 is attached. In some embodiments, the power indicator 220 is a second color or does not emit light if the security system 202 is not connected to the power source.

The security system 202 (e.g., a doorbell) can include an outer housing 224, which can be water resistant and/or waterproof. The outer housing can be made from metal or plastic, such as molded plastic with a hardness of 60 Shore D. In some embodiments, the outer housing 224 is made from brushed nickel or aluminum.

Rubber seals can be used to make the outer housing 224 water resistant or waterproof. The security system 202 can be electrically coupled to a power source, such as wires electrically connected to a building's electrical power system. In some embodiments, the security system 202 includes a battery for backup and/or primary power.

Wireless communication 230 can enable the security system 202 (a doorbell) to communicate with the computing device 204. Some embodiments enable communication via cellular and/or WiFi networks. Some embodiments enable communication via the Internet. Several embodiments enable wired communication between the security system 202 and the computing device 204. The wireless communication 230 can include the following communication means: radio, WiFi (e.g., wireless local area network), cellular, Internet, Bluetooth, telecommunication, electromagnetic, infrared, light, sonic, and microwave. Other communication means are used by some embodiments. In some embodiments, such as embodiments that include telecommunication or cellular communication means, the security system 202 can initiate voice calls or send text messages to a computing device 204 (e.g., a smartphone, a desktop computer, a tablet computer, a laptop computer).

Some embodiments include computer software (e.g., application software), which can be a mobile application designed to run on smartphones, tablet computers, and other mobile devices. Software of this nature is sometimes referred to as "app" software. Some embodiments include software designed to run on desktop computers and laptop computers.

### SOFTWARE OVERVIEW

The computing device 204 can run software with a graphical user interface. The user interface can include icons or buttons. In some embodiments, the software is configured for use with a touch-screen computing device such as a smartphone or tablet.

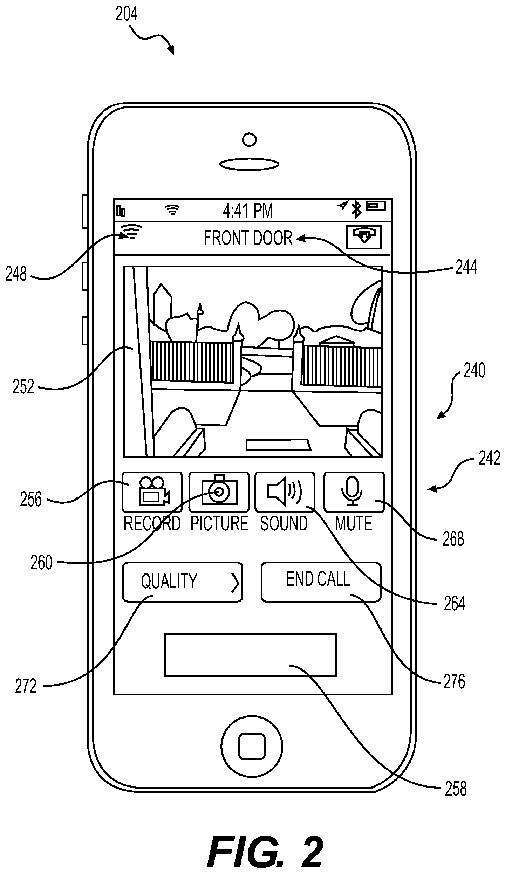

Figure 2 illustrates a computing device 204 running software. The software includes a user interface 240 displayed on a display screen 242. The user interface 240 can include a security system indicator 244, which can indicate the location of the security system that the user interface is displaying. For example, a person can use one computing device 204 to control and/or interact with multiple security systems, such as one security system located at a front door and another security system located at a back door. Selecting the security system indicator 244 can allow the user to choose another security system (e.g., the back door security system rather than the front door security system).

The user interface 240 can include a connectivity indicator 248. In some embodiments, the connectivity indicator can indicate whether the computing device is in communication with a security system, the Internet, and/or a cellular network. The connectivity indicator 248 can alert the user if the computing device 204 has lost its connection with the security system 202; the security system 202 has been damaged; the security system 202 has been stolen; the security system 202 has been removed from its mounting location; the security system 202 has lost electrical power; and/or if the computing device 204 cannot communicate with the security system 202. In some embodiments, the connectivity indicator 248 alerts the user of the computing device 204 by flashing, emitting a sound, displaying a message, and/or displaying a symbol.

### SERVER INTERACTION OVERVIEW

In some embodiments, if the security system 202 loses power, loses connectivity to the computing device 204, loses connectivity to the Internet, and/or loses connectivity to a remote server, a remote server 206 sends an alert (e.g., phone call, text message, image on the user interface 240) regarding the power and/or connectivity issue. In several embodiments, the remote server 206 can manage communication between the security system 202 and the computing device. In some embodiments, information from the security system 202 is stored by the remote server 206. In several embodiments, information from the security system 202 is stored by the remote server 206 until the information can be sent to the computing device 204, uploaded to the computing device 204, and/or displayed to the remotely located person via the computing device 204. The remote server 206 can be a computing device that stores information from the security system 202 and/or from the computing device 204. In some embodiments, the remote server 206 is located in a data center.

In some embodiments, the computing device 204 and/or the remote server 206 attempts to communicate with the security system 202. If the computing device 204 and/or the remote server 206 is unable to communicate with the security system 202, the computing device 204 and/or the remote server 206 alerts the remotely located person via the software, phone, text, a displayed message, and/or a website. In some embodiments, the computing device 204 and/or the remote server 206 attempts to communicate with the security system 202 periodically; at least every five hours and/or less than every 10 minutes; at least every 24 hours and/or less than every 60 minutes; or at least every hour and/or less than every second.

In some embodiments, the server 206 can initiate communication to the computer device 204 and/or to the security system 202. In several embodiments, the server 206 can initiate, control, and/or block communication between the computing device 204 and the security system 202.

### USER INTERFACE OVERVIEW

In several embodiments, a user can log into an "app," website, and/or software on a computing device (e.g., mobile computing device, smartphone, tablet, desktop computer) to adjust the security system settings discussed herein.

In some embodiments, a computing device can enable a user to watch live video and/or hear live audio from a security system due to the user's request rather than due to actions of a visitor. Some embodiments include a computing device initiating a live video feed (or a video feed that is less than five minutes old).

In some embodiments, the user interface 240 displays an image 252 such as a still image or a video of an area near and/or in front of the security system 202. The image 252 can be taken by the camera assembly 208 and stored by the security system 202, server 206, and/or computing device 204. The user interface 240 can include a recording button 256 to enable a user to record images, videos, and/or sound from the camera assembly 208, microphone of the security system 202, and/or microphone of the computing device 204.

In several embodiments, the user interface 240 includes a picture button 260 to allow the user to take still pictures and/or videos of the area near and/or in front of the security system 202. The user interface 240 can also include a sound adjustment button 264 and a mute button 268. The user interface 240 can include camera manipulation buttons such as zoom, pan, and light adjustment buttons. In some embodiments, the camera assembly 208 automatically adjusts between Day Mode and Night Mode. Some embodiments include an infrared camera and/or infrared lights to illuminate an area near the security system 202 to enable the camera assembly 208 to provide sufficient visibility (even at night).

In some embodiments, buttons include diverse means of selecting various options, features, and functions. Buttons can be selected by mouse clicks, keyboard commands, and/or touching a touch screen. Many embodiments include buttons that can be selected without touch screens.

In some embodiments, the user interface 240 includes a quality selection button, which can allow a user to select the quality and/or amount of the data transmitted from the security system 202 to the computing device 204 and/or from the computing device 204 to the security system 202.

In some embodiments, video can be sent to and/or received from the computing device 204 using video chat protocols such as FaceTime (by Apple Inc.) or Skype (by Microsoft Corporation). In some embodiments, these videos are played by videoconferencing apps on the computing device 204 instead of being played by the user interface 240.

The user interface 240 can include a termination button 276 to end communication between the security system 202 and the computing device 204. In some embodiments, the termination button 276 ends the ability of the person located near the security system 202 (i.e., the visitor) to hear and/or see the user of the computing device 204, but does not end the ability of the user of the computing device 204 to hear and/or see the person located near the security system 202.

In some embodiments, a button 276 is both an answer button (to accept a communication request from a visitor) and is a termination button (to end communication between the security system 202 and the computing device 204). The button 276 can include the word "Answer" when the system is attempting to establish two-way communication between the visitor and the user. Selecting the button 276 when the system is attempting to establish two-way communication between the visitor and the user can start two-way communication. The button 276 can include the words "End Call" during two-way communication between the visitor and the user. Selecting the button 276 during two-way communication between the visitor and the user can terminate two-way communication. In some embodiments, terminating two-way communication still enables the user to see and hear the visitor. In some embodiments, terminating two-way communication causes the computing device 204 to stop showing video from the security system and to stop emitting sounds recorded by the security system.

In some embodiments, the user interface 240 opens as soon as the security system detects a visitor (e.g., senses indications of a visitor). Once the user interface 240 opens, the user can see and/or hear the visitor even before "answering" or otherwise accepting two-way communication, in several embodiments.

Some method embodiments include detecting a visitor with a security system. The methods can include causing the user interface to display on a remote computing device 204 due to the detection of the visitor (e.g., with or without user interaction). The methods can include displaying video from the security system and/or audio from the security system before the user accepts two-way communication with the visitor. The methods can include displaying video from the security system and/or audio from the security system before the user accepts the visitor's communication request. The methods can include the computing device simultaneously asking the user if the user wants to accept (e.g., answer) the communication request and displaying audio and/or video of the visitor. For example, in some embodiments, the user can see and hear the visitor via the security system before opening a means of two-way communication with the visitor.

In some embodiments, the software includes means to start the video feed on demand. For example, a user of the computing device might wonder what is happening near the security system 202. The user can open the software application on the computing device 204 and instruct the application to show live video and/or audio from the security device 202 even if no event near the security system 202 has triggered the communication.

In several embodiments, the security device 202 can be configured to record when the security device 202 detects movement and/or the presence of a person. The user of the computing device 204 can later review all video and/or audio records when the security device 202 detected movement and/or the presence of a person.

Referring now to Figure 1, in some embodiments, the server 206 controls communication between the computing device 204 and the security system 202, which can be a doorbell with a camera, a microphone, and a speaker. In several embodiments, the server 206 does not control communication between the computing device 204 and the security system 202.

In some embodiments, data captured by the security system and/or the computing device 204 (such as videos, pictures, and audio) is stored by another remote device such as the server 206. Cloud storage, enterprise storage, and/or networked enterprise storage can be used to store video, pictures, and/or audio from the communication system 200 or from any part of the communication system 200. The user can download and/or stream stored data and/or storage video, pictures, and/or audio. For example, a user can record visitors for a year and then later can review conversations with visitors from the last year. In some embodiments, remote storage, the server 206, the computing device 204, and/or the security system 202 can store information and statistics regarding visitors and usage.

### SYSTEM OVERVIEW

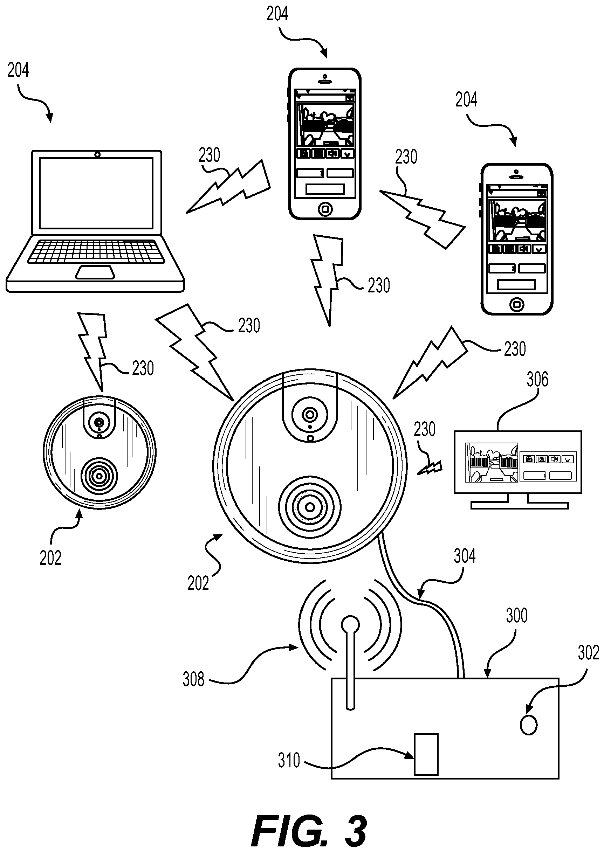

Figure 3 illustrates an embodiment in which a security system 202 is connected to a building 300, which can include an entryway 310 that has a door 254. A door lock 250 can be configured to lock and unlock the door 254. Electrical wires 304 can electrically couple the security system 202 to the electrical system of the building 300 so that the security system 202 can receive electrical power from the building 300.

A wireless network 308 can allow devices to wirelessly access the Internet. The security system 202 can access the Internet via the wireless network 308. The wireless network 308 can transmit data from the security system 202 to the Internet, which can transmit the data to remotely located computing devices 204. The Internet and wireless networks can transmit data from remotely located computing devices 204 to the security system 202. In some embodiments, a security system 202 connects to a home's WiFi.

As illustrated in Figure 3, one computing device 204 (e.g., a laptop, a smartphone, a mobile computing device, a television) can communicate with multiple security systems 202. In some embodiments, multiple computing devices 204 can communicate with one security system 202. In some embodiments, the security system 202 can communicate (e.g., wirelessly 230) with a television 306, which can be a smart television. Users can view the television 306 to see a visitor and/or talk with the visitor.

### JOINING A WIRELESS NETWORK

Although some security system embodiments include using electricity from electrical wires 304 of a building 300, many security system embodiments communicate with computing devices 204 via a wireless network 308 that allows security systems 202 to connect to a regional and sometimes global communications network. In some embodiments, the security system 202 communicates via a wireless network 308 with a router that enables communication with the Internet, which can enable communication via diverse means including telecommunication networks. In this way, a security system 202 can communicate with computing devices 204 that are desktop computers, automobiles, laptop computers, tablet computers, cellular phones, mobile devices, and smart phones.

In some embodiments, a security system (i.e. a doorbell) needs to know which wireless network to join and needs to know the wireless network's password. A computing device, such as a smartphone, can provide this information to the security system.

The following method is used in some embodiments. (Some embodiments include orders that are different from the following order.) First, the computing device (e.g., a smartphone) creates an ad hoc wireless network. Second, the user opens software (such as an app) on the computing device. When the security system is in Setup Mode, the security system can automatically join the computing device's ad hoc network. Third, the user can utilize the software to select the wireless network that the security system should join and to provide the password of the wireless network (e.g., of the router) to the security system.

Diverse methods can be used to connect a security system (i.e. a doorbell) to a wireless network (such as a wireless network of a home). Several embodiments include transmitting an identifier (e.g., a name) to a security system, wherein the identifier enables the security system to identify the wireless network to which the security system should connect. Several embodiments include transmitting a password of the wireless network to the security system, wherein the password enables the security system to connect to the network. In some embodiments, a computing device (e.g., a smartphone) transmits the identifier and password.

In several embodiments, methods of connecting a security system (i.e. a doorbell) to a wireless network (e.g., a wireless network of a home or building) can include placing the security system in Setup Mode. Some security systems automatically go into Setup Mode upon first use, first receiving electrical power, first receiving electrical power after a reset button is pushed, first receiving electrical power after being reset, and/or when a reset button is pushed.

In some embodiments, a Setup Mode comprises a Network Connection Mode. Methods can comprise entering the Network Connection Mode in response to pressing the button for a predetermined amount of time. It should be appreciated that the predetermined amount of time can be any duration of time, for example at least eight seconds. The Network Connection Mode can also comprise detecting a first wireless network having a name and a password. The Network Connection Mode can comprise inputting a doorbell identification code into the remotely located computing device. The doorbell identification code can be associated with the doorbell. The Network Connection Mode can comprise using the doorbell identification code to verify whether the remotely located computing device is authorized to communicate with the doorbell. The Network Connection Mode can comprise the remotely located computing device creating a second wireless network (e.g., that emanates from the remotely located computing device). The Network Connection Mode can comprise transmitting the name and the password of the first wireless network directly from the remotely located computing device to the doorbell via the second wireless network to enable the doorbell to communicate with the remotely located computing device via the first wireless network. Methods can comprise the remotely located computing device directly communicating with the doorbell via the second wireless network prior to the doorbell indirectly communicating with the remotely located computing device via the first wireless network. For example, the wireless communication from the remotely located computing device can travel through the air directly to the doorbell. The wireless communication from the remotely located computing device can travel indirectly to the doorbell via a third electronic device such as a server.

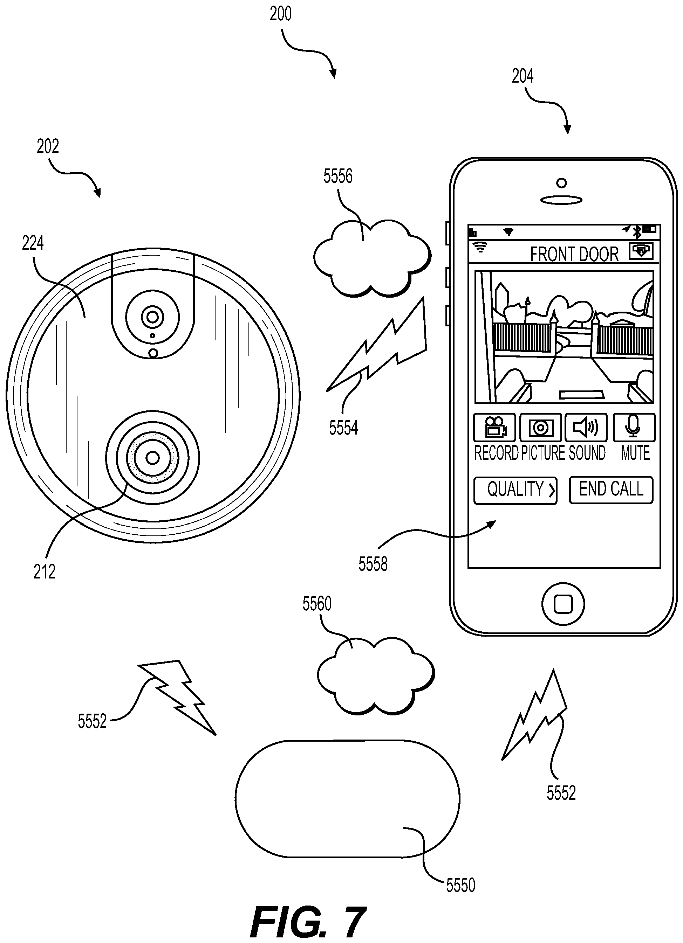

Figure 7 illustrates a communication system with two wireless networks 5556, 5560. The first wireless network 5560 can emanate from a router 5550. The second wireless network can emanate from the computing device 204 (e.g., a cellular telephone). The first wireless network 5560 can enable indirect wireless communication 5552 between the computing device 204 and the security system 202 via the router 5550 or via a server 206 (shown in Figure 1). The second wireless network 5556 can enable direct wireless communication 5554 between the computing device 204 and the security system 202. The computing device 204 can send a password and a name of the first wireless network 5560 to the security system 202 via the second wireless network 5556. In some embodiments, the second wireless network 5556 does not require a password.

In some embodiments, a security system creates its own wireless network (e.g., WiFi network) with a recognizable network name (e.g., a service set identifier). Software can provide setup instructions to the user via a computing device, in some cases, upon detecting a new wireless network with the recognizable network name. The instructions can inform the user how to temporarily join the security system's wireless network with the computing device. The user can select and/or transmit the name and password of a target wireless network to the security system from the computing device. The security system can join the target wireless network (e.g., the wireless network of the building to which the security system is attached) and can terminate its own wireless network.

In some cases, the computing device can capture the name and password of the target network before joining the network of the security system. In some cases, the user enters the name and password of the target network into the computing device to enable the computing device to provide the name and password of the target network to the security system.

In some cases, the computing device recognizes the name of the network of the security system, automatically joins the network of the security system, and transmits the name and password of the target network to the security system. In some cases, these steps are preceded by launching software (on the computing device) configured to perform these steps and/or capable of performing these steps.

Methods can include the security system trying to joint an ad hoc network (or other wireless network) with a fixed network name or a network name based on an identifier of the security system (e.g., the serial number of the security system, the model number of the security system). The computing device can provide instructions to the user to temporarily setup the network (e.g., the ad hoc network) via the computing device. The network can have the fixed network name or the name based on the identifier. The security system can recognize the name and join the network. The computing device can use the network to transmit the name and password of a target network (e.g., the wireless network of the building to which the security system will be coupled) to the security system. The security system can use the name and password of the target network to join the target network.

In some embodiments, the computing device displays an image (e.g., a quick response code) that contains or communicates the name and password of the target network. The security system can use its camera and onboard software to scan and decode the image (to determine the name and password of the target network). The security system can use the name and password of the target network to join the target network.

The computing device can generate and display pulses of light (e.g., by flashing black and white images on the screen of the computing device). The security system can use its camera and software to analyze and decode the pulses of light. The pulses of light can contain the name and/or password of the wireless network. The security system can use the name and password of the target network to join the target network.

In some embodiments, only the password of the target network is given to the security system. The security system can use the password to test each detected wireless network until it identifies a wireless network to which it can connect using the password.

The computing device can generate and emit an audio signal that corresponds to the name and/or password of the target network. The security system can use its microphone and software to analyze and decode the audio signal to receive the name and/or password of the target network. The security system can use the name and password of the target network to join the target network.

In some embodiments, the computing device transmits the name and password of the target network to the security system via Morse code (e.g., using the doorbell button, using light pulses, using sound pulses).

In some embodiments, the security system can pair with the computing device via Bluetooth. The computing device can transmit the name and password of the target network to the security system (e.g., via Bluetooth). The security system can use the name and password of the target network to join the target network.

In several embodiments, the computing device transmits the name and/or password of the target network via infrared ("IR") communication (e.g., IR light) to the security system. The computing device can emit the IR communication via IR LEDs or IR display emissions. An infrared emission device (e.g., with an IR LED) can be electrically coupled to the computing device to enable the computing device to send IR communications. The security system can detect the IR communication via IR sensors. The security system can use the name and password of the target network to join the target network.

### INITIATING COMMUNICATION

Referring now to Figure 3, in some embodiments, multiple computing devices are candidates to receive information from a security system. For example, a person might initiate a communication request by pressing the doorbell button 212 (shown in Figure 1) or triggering a motion or proximity sensor. The security system can notify multiple remotely located computing devices at once. The security system might simultaneously notify a smartphone of a first homeowner, a tablet of a housekeeper, and a laptop located inside the building to which the security system is connected. In some embodiments, once the doorbell ring is answered by one computing device, communication between the security system and the other computing devices is terminated, maintained, or kept open so another user can also participate in the communication. For example, if a housekeeper answers the communication request initiated by the doorbell ring, the homeowner might be unable to join the communication because communication with her computing device was terminated or might have the option to join the communication. In some embodiments, computing devices are assigned a priority and computing devices with a higher priority can terminate the communication of lower priority devices. For example, the homeowner could answer the communication request later than the housekeeper, but the homeowner could terminate the communication between the security device and the housekeeper's computing device. In some embodiments, users can forward communication requests from one computing device to another computing device.

In some embodiments, multiple computing devices are notified in series regarding a communication request. For example, the communication request might initially go to a first remote computing device, but if the communication request is not answered within a certain period of time, the communication request might go to a second remote computing device. If the communication request is not answered, the communication request might go to a third remote computing device.

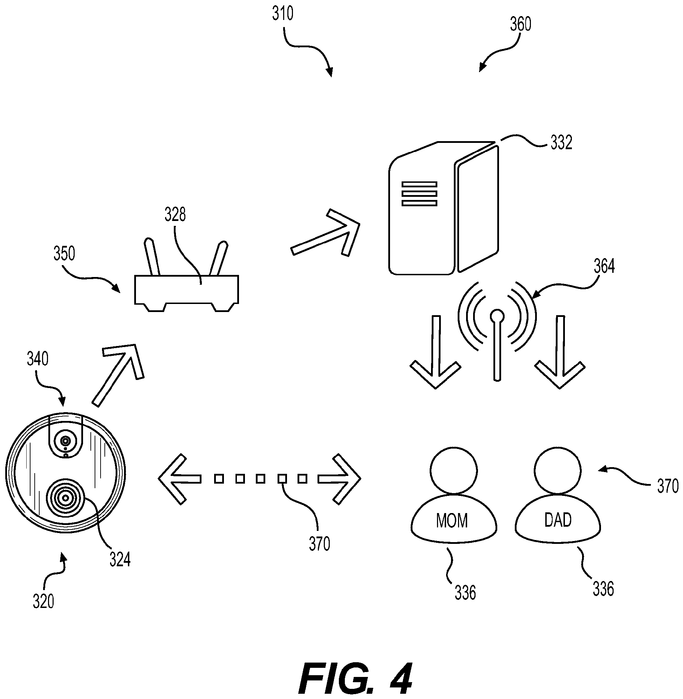

Figure 4 illustrates a communication system 310 that includes a security system 320, a doorbell button 324, a WiFi router 328, a server 332, and users 336. In step 340, a visitor initiates a communication request by pressing the doorbell button 324 or triggering a motion or proximity sensor. The visitor can trigger the motion or proximity sensor by approaching the security system 320. In step 350, the security system 320 connects or otherwise communicates with a home WiFi router 328. In step 360, the server 332 receives a signal from the WiFi router 328 and sends video and/or audio to the users 336 via a wireless network 364. In step 370, the users see the visitor, hear the visitor, and talk with the visitor. Step 370 can include using a software application to see, hear, and/or talk with the visitor. The visitor and users 336 can engage in two-way communication 374 via the internet or other wireless communication system even when the visitor and the users 336 are located far away from each other. Some embodiments enable users to receive communication requests and communicate with visitors via diverse mobile communication standards including third generation ("3G"), fourth generation ("4G"), long term evolution ("LTE"), worldwide interoperability for microwave access ("WiMAX"), and WiFi.

In some cases, the users 336 utilize the communication system 310 to communicate with visitors who are in close proximity to the users 336. For example, a user 336 located inside her home can communicate with a visitor located just outside the home via the communication system 310.

The switch assembly 410 can be placed inside of a housing 415, which can also contain the electronic chime 412. The switch assembly 410 and the electronic chime 412 can be mechanically coupled to the housing 415. The housing 415 can be a plastic housing with a hollow internal portion that contains the electronic chime 412 and the switch assembly 410. At least one screw can mechanically couple the switch assembly inside of the housing 415.

The electronic doorbell (e.g., the security system 202) can be located outside of the housing 415. In some embodiments, the electronic doorbell is placed outside of a building 300 (shown in Figure 3) while the housing 415 is placed inside of the building 300. The electronic doorbell and the housing 415 can be coupled to walls of the building 300. The electronic doorbell can be in a remote location relative to the housing 415 (e.g., the doorbell is located outside while the plastic housing 415 is located inside of the building). The doorbell, the electronic chime 412, and the switch assembly 410 can all be configured to be electrically coupled to the same building power supply 420 even when the doorbell is located in the remote location relative to the housing 415.

Referring now to Figure 3, some embodiments include a location detection system (e.g., GPS) to determine if the computing device 204 is located inside the home, near the home, within 100 feet of the home, within 100 feet of the security system 202, within 50 feet of the home, and/or within 50 feet of the security system 202, in which case the computing device 204 is considered in Close Mode. In some embodiments, the computing device 204 is considered in Close Mode if the computing device 204 is connected to a wireless network 308 of the building to which the security system 202 is coupled. In several embodiments, the computing device 204 is considered in Close Mode if the computing device 204 and the security system 202 are connected to the same wireless network 308. If the computing device 204 is not in Off Mode and not in Close Mode, then the computing device 204 is in Away Mode, in which the computing device 204 is considered to be located remotely from the building 300.

In several embodiments, the computing device 204 can behave differently in Close Mode than in Away Mode. In some embodiments, the computing device 204 will not notify the user of visitors if the computing device 204 is in Close Mode. In several embodiments, Close Mode silences alerts, which can include precluding and/or eliminating the alerts. Instead, the user might have to listen for typical indications of a visitor such as the ring of a traditional doorbell. Once the computing device 204 enters Away Mode, the computing device 204 can notify the user of the visitor. In some embodiments, the computing device 204 notifies the user regarding the visitor if the computing device 204 is in Close Mode or Away Mode.

In several embodiments, the building's 300 doorbell chime is silenced when the computing device 204 is configured to alert the user. In some embodiments, the building's 300 doorbell chime emits sound and the computing device 204 is configured to alert the user.

In several embodiments, the user can decline a communication request by selecting via the user interface 240 a pre-recorded message to be played by the security system 202. The pre-recorded message can include audio and/or video content. Some embodiments can provide the user with options for playing a pre-recorded message on demand, and/or automatically playing a pre-recorded message under user-specified conditions. Examples of conditions that can be specified include time of day, user location, facial recognition or non-recognition of visitors, and/or number of recent visitors. In some embodiments, a pre-recorded message can interrupt two-way communications, which can resume after delivery of the message. In some embodiments, a pre-recorded message can be delivered without interrupting two-way communications.

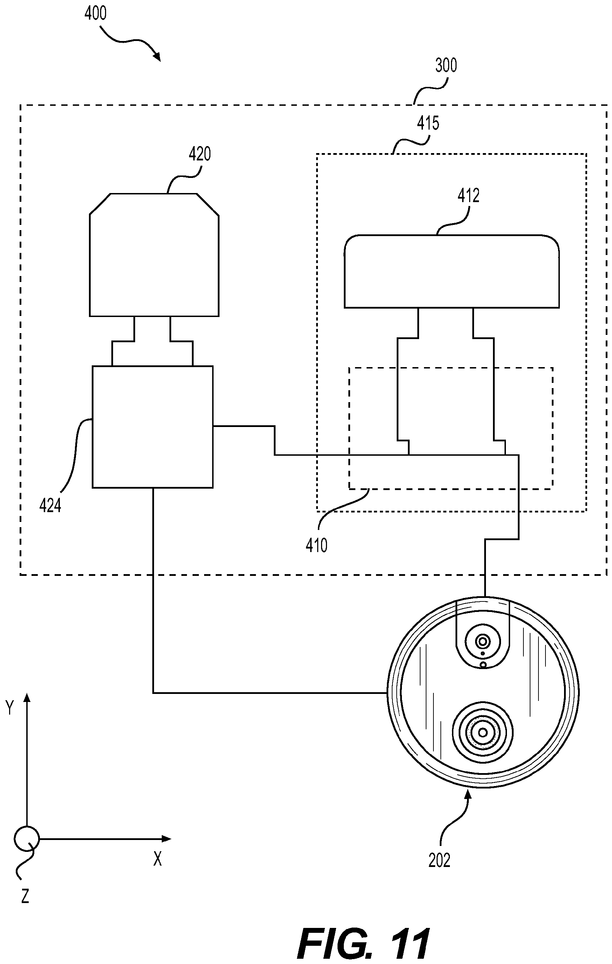

In some embodiments, the security system 202 includes a memory 492 (shown in Figure 11). If the security system 202 cannot communicate with the computing device 204 and/or with the server 206 (shown in Figure 1), the memory 492 of the security system 202 can store a recorded message and/or video from the visitor. Once the security system 202 can communicate with the computing device 204 and/or the server 206, the security system 202 can communicate the recorded message and/or video to the computing device 204 and/or the server 206.

In several embodiments, the security system 202 can ask a visitor to record a message and/or can record pictures (e.g., video, still pictures) when the security system 202 cannot communicate via the wireless network 308. The security system 202 can include a Network Enabled Mode and a Network Disabled Mode. In the Network Enabled Mode, the security system 202 can communicate via the wireless network 308 with a remote server and/or computing device 204. In the Network Disabled Mode, the security system 202 cannot communicate via the wireless network 308 with a remote server and/or computing device 204.

In the Network Enabled Mode, the security system 202 can send video and/or audio from the visitor to the user instantaneously; nearly instantaneously; immediately; within 15 seconds of capturing the video and/or audio; and/or within 60 seconds of capturing the video and/or audio. In the Network Enabled Mode, the security system 202 can preferentially send data (e.g., video, audio, traits, identification) regarding the visitor to the computing device 204 rather than storing the data in the memory of the security system 202. In the Network Disabled Mode, the security system 202 can act as a typical doorbell by, for example, causing a chime inside the building 300 to emit a sound. In some embodiments of the Network Disabled Mode, the security system 202 emits a visible error signal (e.g., flashing light, red light); records images and audio to the security system's memory; asks the visitor to leave a message for the user; and/or alerts the user regarding the lack of wireless communication.

In some embodiments, the security system 202 can maintain a visitor log, which can capture information such as the date, time, audio, video, and/or images of the visitor. The user interface 240 can display this information in a "guest book" format; as a timeline or calendar; as a series of images, videos, and/or audio files; or as a log file.

The user can accept or decline a communication request from a visitor. In some embodiments, the user can push a button (e.g., 276) on the user interface 240 (shown in Figure 2) to decline a communication request or accept a communication request. The user can decline a communication request without the visitor knowing that the user received the communication request. Prior to accepting a communication request, the computing device 204 can allow the user to click a button, such as an icon on a graphical user interface on a touch screen, to see and/or hear the visitor. In some embodiments, accepting a communication request includes opening a two-way line of communication (e.g., audio and/or video) between the visitor and the user to enable the user to speak with the visitor.

A visitor can initiate a communication request by ringing the doorbell of the security system 202, triggering a motion sensor of the security system 202, triggering a proximity sensor of the security system 202, and/or triggering an audio alarm of the security system 202. In some embodiments, the audio alarm includes the microphone of the security system 202. The security system 202 can determine if sounds sensed by the microphone are from a knocking sound, a stepping sound, and/or from a human in close proximity to the security system 202. The security system 202 can detect important sounds such as knocking, talking, and footsteps by recording the sounds and then computing features that can be used for classification. Each sound class (e.g., knocking) has features that enable the security system 202 to accurately identify the sound as knocking, talking, stepping, or extraneous noise. Features can be analyzed using a decision tree to classify each sound. For example, in some embodiments, a visitor can trigger an audio alarm (and thus, initiate a communication request) by knocking on a door located within hearing range of a microphone of the security system 202. In several embodiments, a visitor can trigger an audio alarm (and thus, initiate a communication request) by stepping and/or talking within hearing range of a microphone of the security system 202.

### METHODS OF USE (Examples which may be useful to the understanding of the invention, but which are not claimed.)

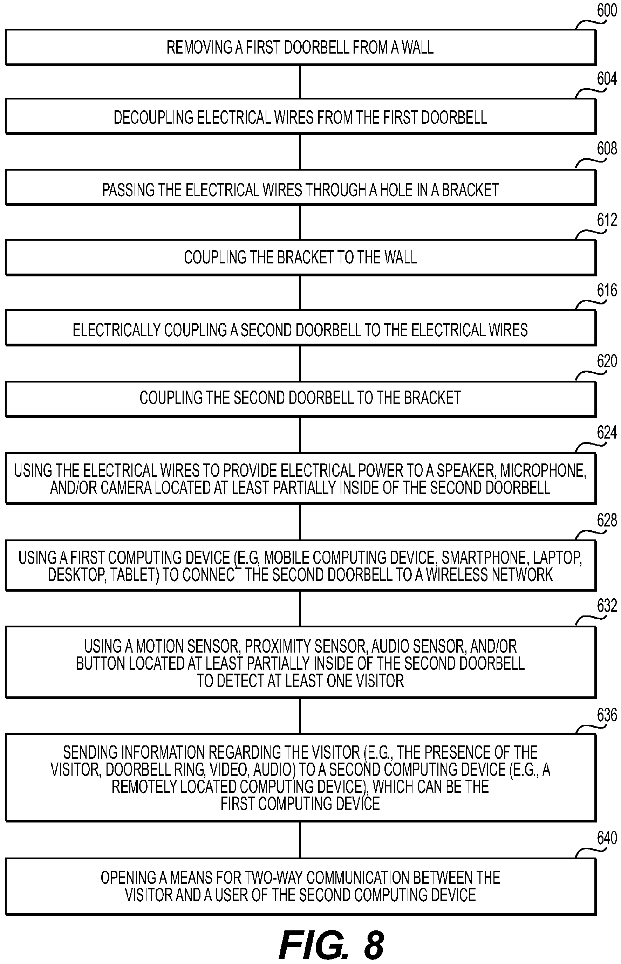

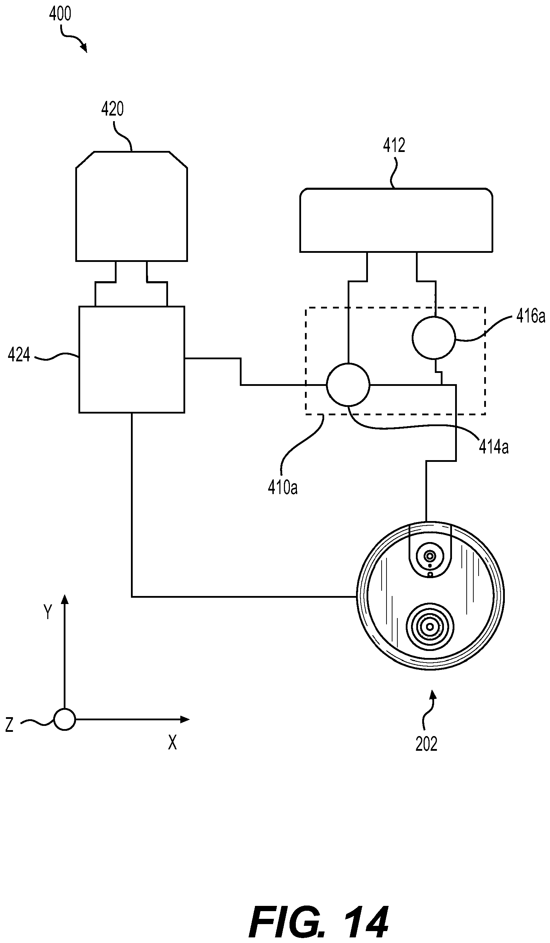

Figure 8 illustrates a method of using a security system . The illustrated method includes optional steps. The steps can be performed in orders different than the order illustrated. In at least one option , at least some of the steps are performed in the order illustrated in Figure 8. Step 600 can include removing a first doorbell from a wall (e.g., the wall of a building). The first doorbell can be a traditional doorbell without a camera. Step 604 can include decoupling electrical wires (e.g., 304 in Figure 3) from the first doorbell. Step 608 can include passing the electrical wires through a hole (e.g., 416 in Figure 14) in a bracket or mounting device. Step 612 can include coupling (e.g., screwing, fastening) the bracket to the wall. Step 616 can include electrically coupling a second doorbell (e.g., 202 in Figure 1) to the electrical wires. The second doorbell can be a security system, such as a security system 202 illustrated in Figure 3. The second doorbell can include a camera (such as a video camera), a speaker, a microphone, and/or a wireless communication assembly. Step 620 can include coupling the second doorbell to the bracket.

Step 624 can include using the electrical wires to provide electrical power to a speaker, microphone, and/or camera located at least partially inside of the second doorbell. Step 628 can include using a first computing device (e.g., mobile computing device, smartphone, laptop, desktop, tablet) to connect the second doorbell to a wireless network. Step 632 can include using a motion sensor, proximity sensor, audio sensor, and/or button located at least partially inside of the second doorbell to detect at least one visitor. The visitor can be a person who approaches the second doorbell and/or rings the second doorbell.

Step 636 can include sending information regarding the visitor (e.g., the presence of the visitor, doorbell ring, video, audio) to a second computing device (e.g., a remotely located computing device), which can be the first computing device. Step 640 can include opening a means for two-way communication between the visitor and a user of the second computing device. The means for two-way communication can enable the user to talk with the visitor and/or see the visitor via a wireless network, a cellular network, and/or the Internet.

### MODES OF OPERATION (Examples which may be useful to the understanding of the invention, but which are not claimed.)

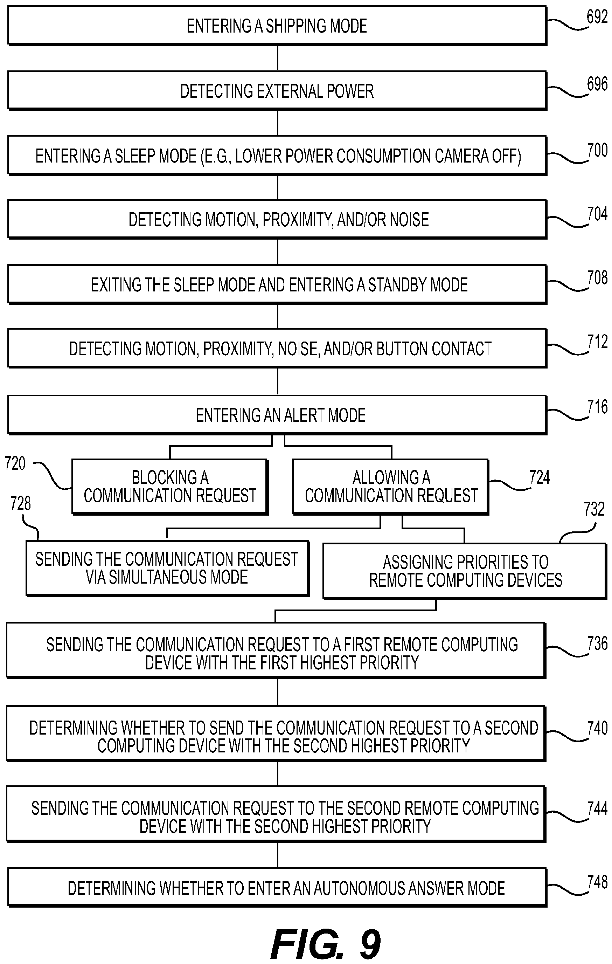

Figure 9 illustrates methods of using a security system . The steps can be performed by a security system and/or by a remotely located server and/or computer. Optionally , all of the steps shown in Figure 9 are performed by a security system (a doorbell). Optionally, Steps 700, 704, 708, 712, 716, 720, and/or 724 are performed by a security system ( i.e. a doorbell).

Optionally, Steps 720, 724, 728, 732, 736, 740, 744, and/or 748 are performed by at least one remote server and/or at least one remote computing system. The steps can be performed in many different orders.

Some options include a Shipping Mods, which can be an ultra-low power mode (e.g., can use even less power than a Sleep Mods). Wireless communication (e.g., WiFi communication, communication module 504 in Figure 11) can be disabled during Shipping Mode. The camera, motion detector, sound detector, microphone, infrared sensors, infrared lights, infrared components, thermometer, heating element, and/or proximity sensor can be disabled during Shipping Mode. During Shipping Mode, the security system (e.g., 202 in Figure 11) can be configured to detect whether the security system is electrically coupled to an external power source (e.g., electricity from a building or home). If the security system detects that the security system is electrically coupled to an external power source, then the security system can be configured to exit Shipping Mode and enter another mode (e.g., Sleep Mode, Standby Mode, Detection Mode, Alert Mode). Optionally, a security system enters Sleep Mode once the security system exits Shipping Mode. Step 692 can include entering a Shipping Mode. Step 696 can include detecting external power. Methods can include exiting a Shipping Mode and/or entering a Sleep Mode in response to detecting external power (e.g., power from outside of the security system).

Step 700 can include entering a Sleep Mode. Sleep Mode has lower power consumption than Standby Mode and/or Alert Mode.

Optionally, Sleep Mode turns off, powers down, and/or reduces the activity of one or more components and/or assemblies. Optionally, the camera is off, not recording, and/or in Low Power Mode while the system is in Sleep Mode.

Optionally, the speaker is off, not recording, and/or in Low Power Mode while the system is in Sleep Mode. Optionally, the microphone is off, not recording, and/or in Low Power Mode while the system is in Sleep Mode.

Step 704 can include detecting motion, proximity, and/or noise. Step 708 can include exiting the Sleep Mode and entering a Standby Mode. Step 712 can include detecting motion, proximity, noise, and/or button contact. Step 716 can include entering an Alert Mode.

In some disclosures, thresholds necessary to exit the Sleep Mode and enter a Standby Mode are less than thresholds necessary to exit the Standby Mode and enter an Alert Mode. In several disclosures, greater motion, closer proximity, and/or louder noise are necessary to enter an Alert Mode than are necessary to exit the Sleep Mode and enter a Standby Mode. In some disclosures, button contact is necessary to enter an Alert Mode. In some disclosures, a system will exit the Sleep Mode and enter a Standby Mode upon detecting motion, detecting motion within 10 feet, or detecting motion within 20 feet. In some disclosures, a system will exit the Sleep Mode and enter a Standby Mode upon detecting sound, upon detecting sound louder than 10 decibels, upon detecting sound louder than 25 decibels, upon detecting sound louder than 50 decibels, upon detecting sound louder than 80 decibels, or upon detecting sound louder than 90 decibels.

The camera is off during the Sleep Mode. As well, in some disclosures, the method further comprises preventing a redundant notification regarding the visitor. In some disclosures, the method further includes preventing a redundant notification regarding the visitor until after a second threshold amount of time. In some disclosures, the second threshold amount of time is at least thirty seconds. However, it should be appreciated that the second threshold amount of time can be any amount of time.

In several disclosures, Standby Mode turns on, powers up, and/or increases the activity (e.g., electrical activity, detection activity, detecting) of one or more components and/or assemblies (relative to Sleep Mode). In some disclosures, the camera is on, recording, and/or in an Intermediate Power Mode while the system is in Standby Mode. In some disclosures of Standby Mode, the camera is configured to quickly start recording, but is not recording. In several disclosures of Standby Mode, the microphone is on, in Detection Mode, and/or detecting sounds to help the system determine if it should change to Alert Mode.

In several disclosures, the system takes a picture when the system enters Standby Mode. In some disclosures, the system takes a picture each time a visitor is detected even if the visitor does not ring the doorbell.

In some disclosures of Alert Mode, the system has determined that a visitor is present and/or attempting to contact a person in the building (e.g., the visitor is ringing a doorbell, waiting by the doorbell, knocking on a door). Some doorbells go into Alert Mode even if the visitor is not trying to contact a person in the building (e.g., the visitor could be a person trying to break into the building). The system can be configured to enter Alert Mode if the system detects a visitor within 20 feet, within 10 feet, or within five feet. The system can be configured to enter Alert Mode if the system detects a sound greater than 50 decibels, 80 decibels, and/or 90 decibels. The system can be configured to enter Alert Mode if a visitor presses a doorbell button and/or triggers a proximity sensor.

The system can be configured to block or allow a communication request (as shown in Steps 720 and 724). The user might want to block communication requests because she is busy or asleep. The user can configure the system to autonomously and/or automatically block communication requests (e.g., a visitor ringing the doorbell would not initiate a communication request to the user). In several embodiments, the system that blocks or allows a communication request can be the doorbell (e.g., 202 in Figure 1), a computing device (e.g., 204 in Figure 1), or a remote server (e.g., 206 in Figure 1).

If the communication request is allowed, the system can send the communication request via Simultaneous Mode as illustrated in Step 728. SimultaneousMode can include sending the communication request simultaneously to at least two computing devices (e.g., computing devices 204 in Figure 3). The request can be sent simultaneously even if the communication requests are not initiated at the same moment as long as the communication requests overlap in at least one moment of time. In some disclosures, if a first user does not respond to a first communication request to a first computing device, the system can send a second communication request to a second computing device while the first communication request is still underway. As a result, the system starts by sending the communication request to the first user, but then simultaneously sends communication requests to both the first user and a second user.

Step 732 can include assigning priorities to remote computing devices. In some disclosures, a computing device with a higher priority will receive a communication request before a computing device with a lower priority. In several disclosures, a computing device and/or user with higher priority will have privileges that are not available to a computing device and/or user with a lower priority. These privileges can include administrative abilities and the ability to alter settings. In some aspects, the administrative privileges can be password protected. The administrator can add and remove notification recipients and/or computing devices 204. For example, a user who sets up the communication system 200 by initially pairing a computing device 204 with a security system 202 can be given administrative privileges and the highest priority (as explained herein). This administrative user can give permissions and priorities to other users and computing devices 204 (e.g., as explained in the context of Figure 9). This administrative user can choose settings. As well, this administrative user can give or transfer administrative rights to another user and/or computing device 204.

Step 736 can include sending the communication request to a first remote computing device with the first highest priority. Step 740 can include determining whether to send the communication request to a second computing device with the second highest priority. Step 744 can include sending the communication request to the second remote computing device with the second highest priority.

Step 748 can include determining whether to enter an Autonomous Answer Mode. Autonomous Answer Mode can include methods of the security system, server, and/or remote computing device interacting with the visitor without user action. For example, if a user does not respond to a communication request, the system can play a recorded message, provide pre-recorded instructions from the user to the visitor, and/or request the visitor to leave a message for the user (e.g., an audio message, a video message).

Accordingly, some disclosures include entering an autonomous answering mode, or Autonomous Answer Mode. In some disclosures, the autonomous answering mode comprises emitting a pre-recorded voice message from the speaker of the doorbell.

In some disclosures, the Autonomous Answer Mode includes sending the communication request to an answering service such as a call center. An operator at the answering service can speak with the visitor, provide instructions to the visitor, and/or take a message from the visitor.

In some disclosures, the method includes replacing automatically the pre-recorded voice message with a non-word sound at least one hour after entering the autonomous answering mode such that the autonomous answering mode comprises emitting the non-word sound rather than the pre-recorded voice message.

Furthermore, in some disclosures, the method includes emitting the doorbell communication request from the first remote computing device for at least seven seconds before emitting the doorbell communication request from a third remote computing device, and then simultaneously emitting the doorbell communication request from both the first remote computing device and the third remote computing device. Moreover, in some disclosures, the method can include simultaneously sending the doorbell communication request to the first remote computing device and to a third remote computing device, and further comprising providing control of the doorbell communication request to the first remote computing device such that the first remote computing device can terminate communication with the third remote computing device.

In some disclosures, assigning the first priority comprises assigning administrative rights.

In some disclosures, both the doorbell and the second remote computing device are connected to a first wireless network. In this manner, the method can further include blocking the second remote computing device from displaying the doorbell communication request in response to detecting that both the doorbell and the second remote computing device are connected to the first wireless network.

In several disclosures, the method includes blocking the doorbell communication request from being accepted by the second remote computing device due to a profile associated with the second remote computing device. The profile may comprise restrictions that prohibit the second remote computing device from accepting the doorbell communication request. As well, the method may include detecting a location of the second remote computing device and blocking the second remote computing device from displaying the doorbell communication request. Accordingly, the doorbell system may block displaying the doorbell communication request in response to the location of the second remote computing device.

In some disclosures, the profile comprises restrictions regarding a time of day. The method may include blocking the doorbell communication request from being displayed by the second remote computing device due to the time of day. As well, in some disclosures, the profile includes restrictions regarding an identity of the visitor. In this manner, the method may further include blocking the doorbell communication request from being displayed by the second remote computing device due to the identity of the visitor.

In some disclosures, both the doorbell and the second remote computing device are connected to a first wireless network. In this manner, the method may further include blocking the second remote computing device from displaying the doorbell communication request in response to detecting that both the doorbell and the second remote computing device are connected to the first wireless network.

There is disclosed a method for using a doorbell system configured to block or allow a doorbell communication request. The method may comprise generating the doorbell communication request regarding the visitor, detecting a location of the first remote computing device, and blocking the first remote computing device from displaying the doorbell communication request. The doorbell system can block displaying the doorbell communication request in response to the location of the first remote computing device.

In some disclosures, the method includes sending the doorbell communication request to the first remote computing device such that the first remote computing device receives the doorbell communication request prior to the doorbell system blocking the first remote computing device from displaying the doorbell communication request in response to the location of the first remote computing device.

Moreover, in some disclosures, the method includes using a second remote computing device to display an image of the visitor and then using the second remote computing device to instruct the doorbell to emit a pre-recorded voice message from the speaker, and then initiating two-way audio communication between the second remote computing device and the doorbell after the visitor has responded to the pre-recorded voice message.

As well, in some disclosures, the method includes initiating two-way audio communication between a second remote computing device and a third remote computing device in response to the doorbell communication request and before initiating two-way audio communication between the doorbell and at least one of the second remote computing device and the third remote computing device.

In some disclosures, the method includes emitting a notification sound from a sound output device located inside of a building in response to the doorbell detecting the visitor. The method may then include enabling the visitor to choose whether to send the doorbell communication request to the first remote computing device. As well, the method may then include sending the doorbell communication request to the first remote computing device in response to the visitor choosing to send the doorbell communication request to the first remote computing device.

Some disclosures may further include determining whether the visitor is still present after sending the doorbell communication request to a second remote computing device and a third remote computing device. As well, the method may then include terminating the doorbell communication request in response to determining the visitor is not present prior to at least one of the second remote computing device and the third remote computing device accepting the doorbell communication request.

In several disclosures, both the doorbell and the first remote computing device are connected to a first wireless network. In this manner, the method may further include blocking the first remote computing device from displaying the doorbell communication request. The blocking may be in response to detecting that both the doorbell and the first remote computing device are connected to the first wireless network.

Many disclosures further include creating a profile of user preferences related to doorbell notifications. The profile may comprise a first time when the first remote computing device will not notify a user regarding the doorbell communication request. As well, the profile may comprise a second time when a chime located inside of a building will not emit a sound. The profile may comprise a list of computing devices capable of receiving the doorbell communication request.

In several disclosures, the user can select a pre-recorded message for the security system to play for the visitor. The security system can play the pre-recorded message for the visitor by emitting the audio message from the speaker. Once the visitor has responded to the pre-recorded message, the user can initiate two-way communication with the visitor. In one disclosure, the pre-recorded message asks the visitor to identify herself and/or to describe her reason for being at the building. The user can listen to the visitor's response before opening two-way communication with the visitor and/or letting the visitor know that the user is listening to the visitor and/or watching the visitor.

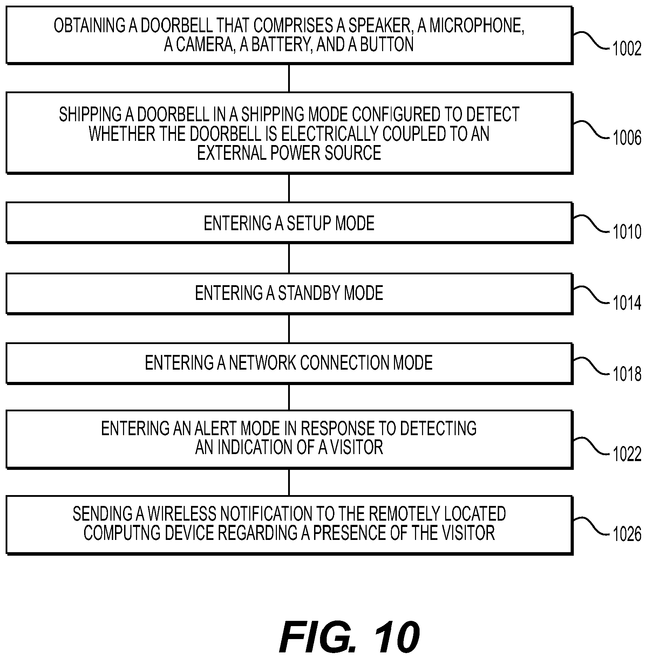

Figure 10 illustrates methods of using a security system (i.e. a doorbell) .

Step 1002 can include obtaining a doorbell that comprises a speaker, a microphone, a camera, a battery, and a button. Step 1006 can include shipping a doorbell in a Shipping Mode. The Shipping Mode can be configured to detect whether the doorbell is electrically coupled to an external power source. Step 1010 can include entering a Setup Mode. Some methods include entering a Setup Mode in response to detecting electricity from an external power source. Step 1014 can include entering a Standby Mode. Several methods include entering a Standby Mode in response to detecting electricity from an external power source. Step 1018 can include entering a Network Connection Mode. Some methods include entering a Network Connection Mode in response to pressing a button of the doorbell for a period of time. Some methods include entering a Network Connection Mode in response to detecting electricity from an external power source. Step 1022 can include entering an Alert Mode. Several methods include entering an Alert Mode in response to detecting an indication of a visitor. Step 1026 can include sending a wireless notification to the remotely located computing device regarding a presence of the visitor. Figure 10 includes optional steps and steps that can be combined with portions of other methods. The steps can be performed in many different orders.

Methods can include usmg a doorbell that is configurable to wirelessly communicate with a remotely located computing device, such as a cellular telephone, laptop, or tablet. Some methods include obtaining a doorbell that comprises a speaker, a microphone, a camera, and a button. The button can be configurable to enable a visitor to sound a chime (e.g., a speaker or another sound emission device located inside of a building). Several methods include shipping the doorbell in a Shipping Mode that consumes power. In the Shipping Mode, the doorbell can detect whether the doorbell is electrically coupled to an external power source (e.g., the electricity of a building to which the doorbell is attached). Methods can then include entering a Network Connection Mode in response to detecting electricity from the external power source. The Shipping Mode can consume less power than the Network Connection Mode. The Network Connection Mode can comprise detecting a wireless network (e.g., a wireless network emitted by a router). Several methods include detecting a first indication of the visitor using the doorbell.

Methods for using a doorbell that is configurable to wirelessly communicate with a remotely located computing device can include obtaining the doorbell that comprises a speaker, a microphone, a camera, and a button. The button is configured to enable a visitor to sound a chime. Some methods include shipping the doorbell in a Shipping Mode that consumes power. During the Shipping Mode, the doorbell can be configured to detect whether the doorbell is electrically coupled to an external power source. Methods can include entering a Setup Mode in response to detecting electricity from the external power source. The Shipping Mode can consume less power than the Setup Mode. The Setup Mode can increase electrical activities of the doorbell relative to the Shipping Mode. Some modes include increasing the electrical activities of the communication module, circuit board, battery, microphone, speaker, and/or camera. Some methods include detecting a first indication of the visitor. The first indication is detected using the doorbell.

The remotely located computing device can be a cellular telephone having a display screen. Methods can comprise sending an image of the visitor from the doorbell to the cellular telephone and displaying the image of the visitor on the display screen of the cellular telephone. Optionally, the method includes entering the setup mode in response to detecting electricity from an external power source.

Some methods comprise detecting a second indication of the visitor, wherein the second indication is detected using the doorbell. Several methods comprise sending a wireless notification to the remotely located computing device regarding a presence of the visitor in response to detecting both the first indication and the second indication.

In some methods, detecting the first indication comprises detecting a signal indicative of the visitor above a first threshold and detecting the second indication comprises detecting the signal indicative of the visitor above a second threshold. In some disclosures, the second threshold is greater than the first threshold. The doorbell can comprise a first sensor. The signal indicative of the visitor can be sensed by the first sensor of the doorbell.

In several embodiments, the first sensor of the doorbell comprises a motion sensor and the signal is related to motion. The camera, the speaker, and/or the microphone can be disabled during the Setup Mode.

The first sensor of the doorbell can comprise a proximity sensor. The signal can be related to proximity of the visitor.

The first sensor of the doorbell can comprise a microphone. The signal can be related to sound. In some embodiments, detecting the second indication comprises detecting a knocking sound. As well, in some disclosures, the speaker comprises a flat speaker located in a sound chamber configured to amplify an emitted sound.

In several disclosures, a doorbell comprises a first sensor and a second sensor. The first indication can be detected using the first sensor and the second indication can be detected using the second sensor. The first sensor can be a different type of sensor than the second sensor.

In some disclosures, the first sensor of the doorbell comprises a motion sensor. The second sensor can comprise the microphone. Methods can comprise using the microphone to detect a knocking sound to verify the presence of the visitor detected by the motion sensor. As well, in some methods the motion sensor is at least partially covered by a cover, and the method can further comprise detecting motion through the cover while obscuring the motion sensor from the visitor and while not emitting a visible light from the doorbell.

In several disclosures, the first sensor of the doorbell comprises an infrared detector and the second sensor comprises the camera.

In some disclosures, the doorbell comprises a battery. The Setup Mode can comprise automatically charging the battery in response to detecting the electricity from the external power source.

In some disclosures, the Setup Mode comprises automatically replenishing at least a portion of electrical energy consumed from the battery by the doorbell during the Shipping Mode. Methods can comprise precluding wireless communication by the doorbell until after replenishing the portion of the electrical energy and then entering a Network Connection Mode in response to pressing the button for at least eight seconds. Pressing the button for at least eight seconds can help the doorbell distinguish between when the user just wants to sound the chime and when the user wants the doorbell to enter the Network Connection Mode. The Network Connection Mode can comprise detecting a wireless network.

In several disclosures, the doorbell comprises a battery and the Setup Mode comprises using the electricity from the external power source to charge the battery before enabling communication between the doorbell and the remotely located computing device.

In some disclosures, the Setup Mode comprises a Network Connection Mode, and the method comprises entering the Network Connection Mode in response to pressing the button for a predetermined amount of time. It should be appreciated that the predetermined amount of time can be any duration of time, for example at least eight seconds. The Network Connection Mode can also comprise detecting a wireless network and inputting a doorbell identification code into the remotely located computing device. In some disclosures, inputting the doorbell identification code includes typing letters, numbers, words, and/or symbols on the remotely located computing device. Inputting the doorbell identification code can include speaking letters, numbers, words, and/or symbols such that the remotely located computing device hears the information and captures the information.

The doorbell identification code can be associated with the doorbell such that the code is correlated with at least one doorbell. The code can be used as an electronic key to unlock access to the doorbell. The Network Connection Mode can comprise using the doorbell identification code to verify whether the remotely located computing device is authorized to communicate with the doorbell. For example, the code can prevent an unauthorized computing device from hacking into the doorbell and receiving visitor alerts from the doorbell.

In several disclosures, the Network Connection Mode comprises enabling communication from the remotely located computing device to the doorbell in response to pressing the button for at least eight seconds and inputting the doorbell identification code into the remotely located computing device. Pressing the button for at least eight seconds can help the doorbell distinguish between when the user just wants to sound the chime and when the user wants to enable communication from the remotely located computing device to the doorbell.

In some disclosures, the remotely located computing device is connected to the wireless network such that the remotely located computing device is configured to transmit data via the wireless network. The wireless network can comprise a name and a password. The name can identify the wireless network to entities searching for wireless networks. The password can enable an electronic device to connect to the wireless network. The wireless network can enable electronic devices to connect to the Internet.

The communication from the remotely located computing device to the doorbell can comprise the name and the password of the wireless network to which the remotely located computing device is connected. The Network Connection Mode can comprise connecting the doorbell to the wireless network to which the remotely located computing device is connected such that the doorbell can send an alert regarding a presence of the visitor to the remotely located computing device via the wireless network.

Some methods include using the doorbell to detect multiple wireless networks. The wireless network to which the remotely located computing device is connected can be one of the multiple wireless networks. Methods can comprise automatically selecting the wireless network to which the remotely located computing device is connected. For example, the system can choose which wireless network to connect the doorbell without asking a person which wireless network the system should choose.

Several methods include entering the Network Connection Mode prior to sending the wireless notification. The Network Connection Mode can comprise detecting a first wireless network having a name and a password. The Network Connection Mode can comprise inputting a doorbell identification code into the remotely located computing device. The doorbell identification code can be associated with the doorbell. The Network Connection Mode can further comprise using the doorbell identification code to verify whether the remotely located computing device is authorized to communicate with the doorbell. The Network Connection Mode can comprise the remotely located computing device creating a second wireless network. The Network Connection Mode can comprise transmitting the name and the password of the first wireless network directly from the remotely located computing device to the doorbell via the second wireless network to enable the doorbell to communicate with the remotely located computing device via the first wireless network. Methods can comprise the doorbell directly communicating with the remotely located computing device via the second wireless network prior to the doorbell indirectly communicating with the remotely located computing device via the first wireless network.

In some disclosures, the method includes entering the Network Connection Mode in response to pressing the button for a predetermined amount of time. It should be appreciated that the predetermined amount of time can be any duration of time, for example at least eight seconds. The Network Connection Mode can also comprise detecting a first wireless network having a name and a password. The Network Connection Mode can comprise inputting a doorbell identification code into the remotely located computing device. The doorbell identification code can be associated with the doorbell. The Network Connection Mode can comprise using the doorbell identification code to verify whether the remotely located computing device is authorized to communicate with the doorbell. The Network Connection Mode can comprise the remotely located computing device creating a second wireless network (e.g., that emanates from the remotely located computing device). The Network Connection Mode can comprise transmitting the name and the password of the first wireless network directly from the remotely located computing device to the doorbell via the second wireless network to enable the doorbell to communicate with the remotely located computing device via the first wireless network. Methods can comprise the remotely located computing device directly communicating with the doorbell via the second wireless network prior to the doorbell indirectly communicating with the remotely located computing device via the first wireless network. For example, the wireless communication from the remotely located computing device can travel through the air directly to the doorbell. The wireless communication from the remotely located computing device can travel indirectly to the doorbell via a third electronic device such as a server.

A remotely located computing device can be located near a doorbell. For example, during setup some users will hold a cellular phone within a couple of feet from the doorbell to input a doorbell identification code into the cellular phone to verify that the phone is authorized to communicate with the doorbell and to help the doorbell connect to a wireless network. The phone is located remotely from the doorbell because it is not physically attached to the doorbell.

Several methods include using a doorbell that is configurable to wirelessly communicate with a remotely located computing device. Methods can include shipping the doorbell in a Shipping Mode that consumes electrical energy (or power) from the doorbell. During some Shipping Mode embodiments, the doorbell is configured to detect whether the doorbell is electrically coupled to an external power source. Several embodiments include entering a Standby Mode in response to detecting electricity from the external power source. The Shipping Mode can consume less power than the Standby Mode. The speaker and the microphone can be disabled during the Standby Mode. Some embodiments of the method may then include entering the setup mode in response to detecting electricity from the external power source. It should be appreciated that the setup mode can increase electrical activities of the doorbell relative to the shipping mode.

Embodiments include exiting the Standby Mode and entering an Alert Mode in response to detecting a first indication of the visitor. The first indication is detected using the doorbell. Several embodiments include sending a wireless notification to the remotely located computing device regarding a presence of the visitor in response to entering the Alert Mode. In some methods, the method includes sending a wireless notification to the remotely located computing device regarding a presence of the visitor in response to the visitor being present for more than a first threshold amount of time. As well, some methods include sending the notification to the remotely located computing device before the visitor presses the button of the doorbell. In some disclosures, the first threshold amount of time is at least three seconds and less than forty seconds.

The network connection mode may include connecting the doorbell to the first wireless network to which the remotely located computing device is connected such that the doorbell can send an alert regarding a presence of the visitor to the remotely located computing device via the first wireless network. As well, some methods further include using the doorbell to detect multiple wireless networks. The multiple wireless networks may include the first wireless network. In this manner, some methods also include automatically selecting the first wireless network to which the remotely located computing device is connected from the multiple wireless networks to enable the doorbell to connect to the first wireless network to which the remotely located computing device is connected.

Some methods include detecting multiple wireless networks and automatically selecting a first wireless network for communicating between the doorbell and the remotely located computing device. Prior to the automatic selection, the remotely located computing device can be connected to the first wireless network. Methods can further comprise authorizing the doorbell to communicate with the remotely located computing device by pressing the button for at least eight seconds and inputting a doorbell identification code into the remotely located computing device. The doorbell identification code can be associated with the doorbell. The first wireless network can comprise a name and a password. Methods can further comprise wirelessly communicating the name and the password from the remotely located computing device to the doorbell.

Furthermore, the method may include detecting a first indication and a second indication of the visitor. The first indication and the second indication is detected using the doorbell. As well, the method further includes sending the wireless notification to the remotely located computing device regarding the presence of the visitor in response to detecting both the first indication and the second indication. Detecting the first indication may include detecting a signal indicative of the visitor above a first threshold, and detecting the second indication may include detecting the signal indicative of the visitor above a second threshold. The second threshold may be greater than the first threshold. As well, the doorbell may include a first sensor, and the signal indicative of the visitor may be sensed by the first sensor of the doorbell.

In some systems, the doorbell may include the first sensor and a second sensor. The first indication may be detected using the first sensor and the second indication may be detected using the second sensor. The first sensor may be a different type of sensor than the second sensor. However, in some systems, the first sensor is the same type of sensor as the second sensor.

### POWER MANAGEMENT

Different parts of the world often use different types of electrical power. In addition, different houses sometimes have different wiring configurations and system installers might use different installation techniques. Several embodiments include special features that enable compatibility with any voltage, current, and wiring configuration. Some embodiments can function properly regardless of current direction or type.

Referring now to Figure 11, several embodiments can be configured for 9 to 40 volts alternating current ("VAC") and/or 9 to 40 volts direct current ("VDC"). Some embodiments convert input electricity into direct current (DC), such as 12 VDC. Several embodiments include a converter 494 for power conversion (e.g., converting electrical energy from one form to another). The converter 494 can convert input power (e.g., from wiring in a building) to a suitable power form for the security system 202. The power conversion can convert between AC and DC, change the voltage, and/or change the frequency. The converter 494 can include a transformer and/or a voltage regulator. In several embodiments, the converter 494 can include a DC to DC converter, a voltage stabilizer, a linear regulator, a surge protector, a rectifier, a power supply unit, a switch, an inverter, and/or a voltage converter. In some embodiments, the converter 494 converts 50 Hertz ("Hz") power into 60 Hz power.

In some embodiments, the security system 202 uses a first amount of power to "ring" the chime inside of the building and a second amount of power when in Standby Mode, wherein the first amount of power is at least twice as large as the second amount of power.

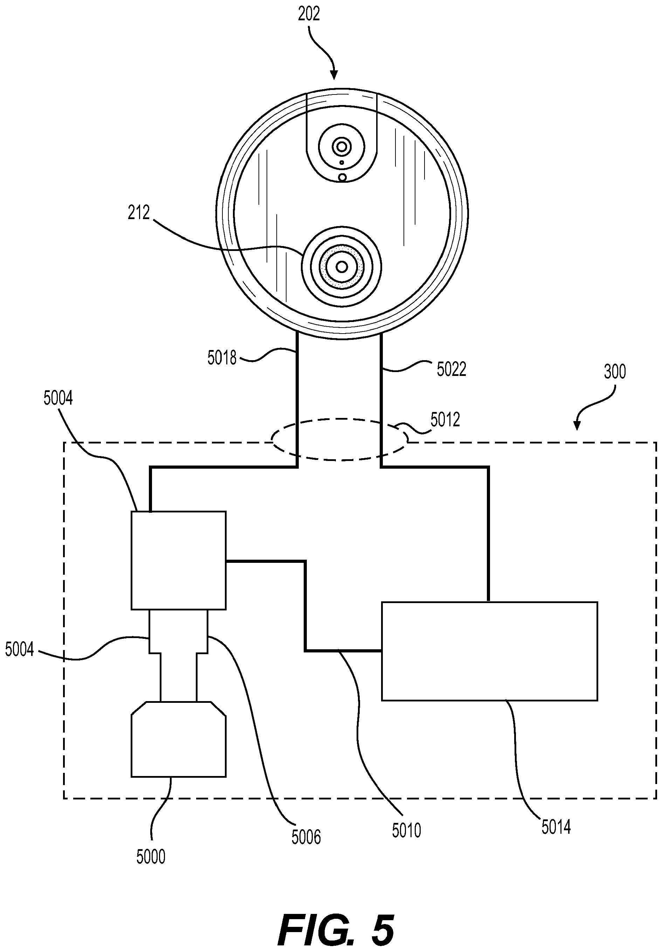

Figure 5 illustrates a diagrammatic view of an electrical power configuration, according to some embodiments. The security system 202 can be located outside of a building 300 and/or coupled to a wall of the building 300. The building 300 can be a home, an office building, a government building, an enclosure, or any other type of structure configured to shelter people.

The building 300 can include a building power supply 5000, which can receive electrical power from a public utility. A transformer 5004 can be electrically coupled to the building power supply 5000 by a first wire 5004 and a second wire 5006. As used herein, "wire" can include electrical conductors such as metal cables and wires. The transformer 5004 can step down the electrical power (e.g., 120 volts AC, 240 volts AC) from the building power supply 5000 to a lower voltage (e.g., at least 10 volts and/or less than 20 volts, at least 7 volts and/or less than 25 volts).

A third wire 5010 can electrically couple the transformer 5004 to a sound output device 5014, which can be a chime, a speaker, a bell, or another device suitable to emit a sound inside of the building 300. A fourth wire 5018 can electrically couple the transformer 5004 to the security system 202 (e.g., the doorbell). A fifth wire 5022 can electrically couple the security system 202 to the sound output device 5014. As a result of this configuration, the security system 202 can control the flow of electricity to the sound output device 5014. In many embodiments, the sound output device 5014 is configured such that it cannot emit sound without a trigger power above a triggering threshold. The trigger power comes from the building power supply 5000 and flows into the transformer 5004 (via wires 5004, 5006). Thus, the transformer 5004 can supply the trigger power to a first circuit that comprises the fourth wire 5018, at least a portion of the security system 202, the fifth wire 5022, the sound output device 5014, and the third wire 5010. The fourth wire 5018 and the fifth wire 5022 can protrude from a hole 5012 in the outside of the building 300.

In some doorbell electrical power configurations, pressing a mechanical doorbell button (not shown) creates a closed electrical loop to energize a chime. In other words, the mechanical doorbell button can be a switch that is normally in an open position and is in a closed position when a person presses the button.

Some doorbell systems include a sound output device 5014 that includes a plunger configured to strike two flat metal bar resonators. The plunger can be operated by solenoids. Pressing the mechanical doorbell button can cause the solenoid to force the plunger to hit a first resonator. If a spring is included, then the spring can cause the plunger to hit a second resonator (e.g., when the mechanical doorbell button is released). The plunger hitting a resonator can cause a sound (e.g., a "ding" sound) to be emitted from the sound output device 5014.

Some sound output devices include a first solenoid and a second solenoid. The first solenoid can be configured to hit both a first metal bar and a second metal bar (e.g., to make a "ding-dong" sound). The second solenoid can be configured to hit the first metal bar, but not the second metal bar (e.g., to make a "ding" sound). In some cases, a first doorbell (e.g., a front doorbell) activates the first solenoid (e.g., to make a "ding-dong" sound) and a second doorbell (e.g., a back doorbell) activates the second solenoid (e.g., to make a "ding" sound). This approach can enable a user to distinguish between the front doorbell's sound and the back doorbell's sound (as emitted from a sound output device).

While pressing a mechanical doorbell button can close an electrical circuit to energize a chime and thereby cause a chime to emit a sound to notify a person inside of a building, the security system 202 can be configured (in some embodiments) such that pressing the doorbell button 212 does not mechanically close an electrical circuit to cause a chime to emit a sound. In several embodiments, the doorbell button 212 is not a switch that electrically couples the fourth wire 5018 to the fifth wire 5022. Instead, the fourth wire 5018 and the fifth wire 5022 can be electrically coupled to a printed circuit board ("PCB") 516 (shown in Figure 11). The other items in Figure 11 (e.g., 458, 524, 500, 504, 508, 510, 512, 462, 484, 494, 488, 480, 492, 208) can receive electrical power from the PCB 516.

In some embodiments, the doorbell button 212 is a press sensor (rather than the doorbell button 212 being physically coupled to a mechanical switch that can electrically close a circuit between the transformer 5004 and the sound output device 5014). The sensor can detect when a visitor presses the doorbell button 212. This "press detection" is used by software of the security system 202 or of the communication system 200 (shown in Figure 1) to help determine whether to emit sound from the sound output device 5014 and/or whether to notify the user via a computing device (e.g., 204 in Figure 1) based on additional parameters such as a profile and/or user settings.

Referring now to Figure 5, in some embodiments, the security system 202 (e.g., the PCB 516 and electrical components coupled to the PCB 516) is configured to allow alternating current ("AC") power to flow from the security system 202, to the sound output device 5014, and/or to the transformer 5004. In several embodiments, the security system 202 is configured to provide direct current ("DC") power to at least portions of the PCB 516. In some embodiments, the security system 202 is configured to provide AC power to the sound output device 5014 while providing DC power to at least portions of the PCB 516.

In several embodiments, electrical power for the sound output device 5014 and/or electrical power for the PCB 516 is routed through the security system 202 and/or through the PCB 516. Electrical power from the fourth wire 5018 can be routed through the security system 202 and/or through the PCB 516 prior to reaching the fifth wire 5022. Electrical power from the fifth wire 5022 can be routed through the security system 202 and/or through the PCB 516 priorto reaching the fourth wire 5018. Thus, electrical power for the sound output device 5014 (e.g., chime) does not need to bypass the security system 202.

In some embodiments, the security system 202 includes a Non-Energizing Mode in which the security system 202 provides DC power to at least portions of the PCB 516 while draining power to the sound output device 5014, wherein the power to the sound output device is below a triggering threshold. The triggering threshold is the amount of electrical power (e.g., volts, current) necessary to cause the sound output device 5014 to emit a notification sound (e.g., a sound configured to notify a person inside of the building 300 that someone is at the door). In several embodiments, the security system 202 includes an Energizing Mode in which the security system 202 provides AC power to the sound output device above the triggering threshold. In some embodiments of the Energizing Mode, the security system 202 provides DC power to at least portions of the PCB 516.

In some embodiments of the Non-energizing Mode, the security system 202 provides less than 30%, less than 20%, less than 10%, at least 3%, at least 1%, and/or at least 0.1% of the power from the transformer 5004 to the sound output device 5014. In some embodiments of Energizing Mode, the security system 202 provides at least 70%, at least 80%, at least 90%, or at least 95% of the power from the transformer 5004 to the sound output device 5014. In several embodiments, the security system 202 charges the battery 462 during Non-Energizing Mode and does not charge the battery 462 during Energizing Mode.

In some embodiments, the security system 202 includes a rectifier 524 to convert AC to DC. The rectifier 524 can comprise vacuum tube diodes, mercury-arc valves, copper and selenium oxide rectifiers, semiconductor diodes, silicone-controlled rectifiers, and/or silicone-based semiconductor switches. In this manner, the doorbell may comprise a rectifier configured to convert the first portion of the first alternating current into the first direct current.

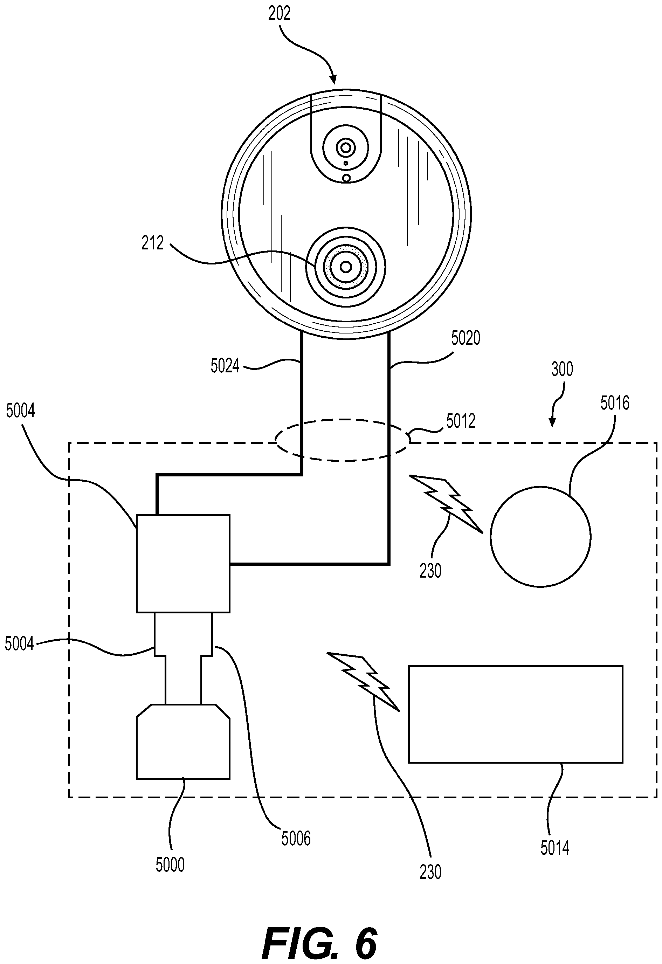

Figure 6 illustrates a diagrammatic view of a security system configured to communicate wirelessly with a sound output device 5014 and/or a speaker 5016, according to some embodiments. A digital chime is one type of sound output device 5014. In some embodiments, chimes do not include solenoids configured to drive a plunger to hit a metal component to make a sound (e.g., a "ding" sound). In some embodiments, the sound output device 5014 is a speaker 5016 that can emit a digital sound such as a pre-recorded "ding" or any other sound (e.g., a song or prerecorded words).

In some embodiments, the security system 202 is connected electrically to a transformer 5004 (e.g., via a third wire 5020 and a fourth wire 5024) and/or is electrically connected to a building power supply 5000 (e.g., via a first wire 5004 and a second wire 5006). In several embodiments, the security system 202 can wirelessly communicate with the sound output device 5014 (e.g., a solenoid-based chime, a digital chime, a speaker) via any suitable means of wireless communication 230. Wireless communication 230 between the security system 202 (e.g., a doorbell) and the speaker 5016 may enable the system to emit notification sounds from the external speaker 5016, which can be located inside of the building 300 (although the speaker 5016 is external relative to the security system 202.

Some embodiments include connecting the doorbell electrically to an electrical power supply of a building, connecting the doorbell electrically to a sound output device located inside of the building, connecting the doorbell communicatively to a remote computing device, receiving a first alternating current into the doorbell from the power supply of the building, and converting at least a first portion of the first alternating current into a first direct current. The converting may occur within the outer housing of the doorbell.

The method may also include using the first direct current to provide a first electrical energy to the camera, and draining the first direct current to the sound output device located inside of the building. The first direct current may provide a first electrical power that is less than a triggering threshold of the sound output device such that the sound output device does not emit a notification sound in response to the first electrical power.

While draining the first direct current to the sound output device such that first direct current provides the first electrical power that is less than the triggering threshold, the method may also include detecting the presence of a visitor that is located outside of the building to which the doorbell is attached. Then after the detecting step, the method may include using the doorbell to supply a second electrical power to the sound output device, wherein the second electrical power is greater than the triggering threshold of the sound output device such that the sound output device emits the notification sound in response to the second electrical power.

Furthermore, while using the doorbell to supply the second electrical power to the sound output device, the method may include initiating a transmission of a notification to the remote computing device to notify a user of the visitor's presence. Then after transmitting the notification to the remote computing device, the method may include using the doorbell to supply the first electrical power to the sound output device such that the sound output device does not emit a notification sound in response to the first electrical power. While using the doorbell to supply the first electrical power to the sound output device, the method may include continuing to transmit the notification to the remote computing device to notify the user of the visitor's presence.

In some embodiments, the visitor may be a first visitor and the steps may be performed during a first predetermined period of time. In response to a second predetermined period of time, while draining the first direct current to the sound output device such that first direct current provides the first electrical power that is less than the triggering threshold, the method may include detecting the presence of a second visitor that is located outside of the building to which the doorbell is attached. Then after detecting the second visitor, the method may include using the doorbell to continue supplying the first electrical power to the sound output device such that the sound output device does not emit a notification sound in response to the first electrical power. While using the doorbell to supply the first electrical power to the sound output device, the method may include initiating a transmission of a notification to the remote computing device to notify the user of the second visitor's presence. Then after initiating the transmission of the notification of the second visitor's presence to the remote computing device, the method may include using the doorbell to continue supplying the first electrical power to the sound output device such that the sound output device does not emit a notification sound in response to the first electrical power. Furthermore, while using the doorbell to supply the first electrical power to the sound output device, the method may include continuing to transmit the notification to the remote computing device to notify the user of the second visitor's presence. The first predetermined period of time may be from sunrise to sunset, and the second predetermined period of time may be from sunset to sunrise.

In some embodiments, the second electrical power may comprise a second alternating current. As well, the power supply may comprise a transformer with a maximum available electrical power. In some embodiments, the second electrical power is at least ninety percent of the maximum available electrical power. However, it should be appreciated that the second electrical power may be any percent greater than or less than ninety percent. As well, it should be appreciated that the first electrical power may be any percent, such as ten percent, five percent, greater than ten percent, less than ten percent, greater than five percent, or less than five percent.

Some embodiments of the method may include using the first direct current to provide a second electrical energy to a printed circuit board of the doorbell while draining the first direct current to the sound output device. The method may further include using the printed circuit board to provide a third electrical energy to the microphone and the speaker.

The doorbell may comprise a battery and, in some embodiments, the method may further include using the first direct current to charge the battery of the doorbell while draining the first direct current to the sound output device.

Some embodiments of the method may include converting at least the first portion of the first alternating current into the first direct current while using the doorbell to supply a second alternating current to the sound output device. The second alternating current may supply a second electrical power to the sound output device. In some embodiments, the second electrical power may be greater than the triggering threshold of the sound output device such that the sound output device emits the notification sound in response to the second electrical power.

The doorbell may include a battery and a printed circuit board and, in some embodiments, the method may further include using the battery to supply a third electrical power to the printed circuit board while using the doorbell to supply a second alternating current to the sound output device. The second alternating current may supply a second electrical power to the sound output device. As well, the second electrical power may be greater than the triggering threshold of the sound output device such that the sound output device emits the notification sound in response to the second electrical power.

Disclosures include a method for replacing a first doorbell with a second doorbell. The method can include detaching the first doorbell from a first wire that is electrically connected to the transformer, detaching the first doorbell from a second wire that is electrically connected to the sound output device, and obtaining the second doorbell. Some methods may also include connecting the second doorbell electrically to the first wire that is electrically connected to the transformer, connecting the second doorbell electrically to the second wire that is electrically connected to the sound output device, and connecting the second doorbell communicatively to a remote computing device. In several disclosures, the method includes receiving a first alternating current into the second doorbell from at least one of the first wire and the second wire and converting at least a first portion of the first alternating current into a first direct current. It should be appreciated that the converting can occur within the outer housing of the second doorbell.

In some disclosures, the method includes using the first direct current to provide a first electrical energy to at least a second portion of the second doorbell, draining the first direct current to at least one of the first wire and the second wire, arranging and configuring the second doorbell to detect the presence of a visitor located outside of the building to which the doorbell is attached, and arranging and configuring the second doorbell to simultaneously transmit a first notification to a remote computing device to notify a user of the visitor's presence. During the transmission of the first notification the doorbell supplies the sound output device with a first electrical power that is less than a triggering threshold of the sound output device such that the sound output device does not emit a notification sound in response to the first electrical power, and transmit a second notification to the sound output device located inside of the building to notify a user of the visitor's presence. The second notification may comprise supplying the sound output device with a second electrical power that is greater than the triggering threshold of the sound output device such that the sound output device emits the notification sound in response to the second electrical power.

The second doorbell may receive the first alternating current via the first wire and the second doorbell may drain the first direct current via the second wire. The second doorbell may receive the first alternating current via the second wire and the second doorbell may drain the first direct current via the first wire.

The second portion of the second doorbell may include a printed circuit board connected electrically to the speaker, the microphone, and the camera. It should be appreciated that the printed circuit board may be located inside of the outer housing. In some embodiments, the method may further comprise using the first direct current to provide a second electrical energy to the speaker, the microphone, and the camera via the printed circuit board.

Some methods include detecting the presence of a visitor that is located outside of the building to which the doorbell is attached. In response to detecting the presence of the visitor, the method may include transmitting a first notification to the remote computing device to alert a first user of the visitor's presence. During the transmission of the first notification the doorbell may supply the sound output device with the first electrical power, and transmitting a second notification to the sound output device located inside of the building to alert a second user of the visitor's presence. The second notification may include supplying the sound output device with a second electrical power that is greater than the triggering threshold of the sound output device such that the sound output device emits the notification sound in response to the second electrical power.

In some disclosures, the first user and the second user are the same. However, in some disclosures, the first user and the second user are different.

### ELECTRICITY ROUTING SYSTEMS

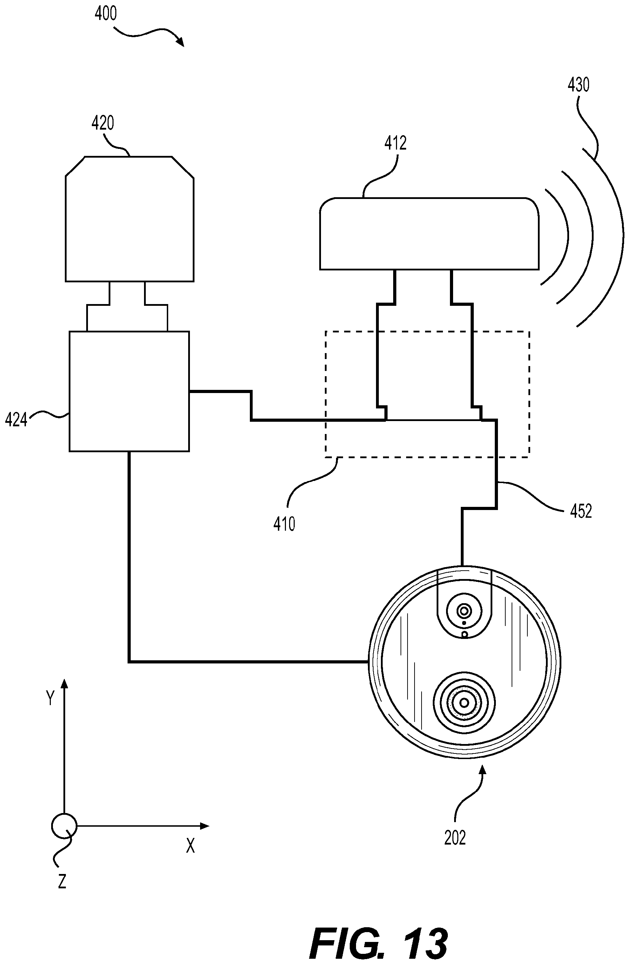

Figures 11-19 illustrate several embodiments of doorbell systems that include electronic switch assemblies for blocking and/or allowing electricity to enter an electronic chime 412 (e.g. a digital chime). In the example shown in Figure 11, the doorbell system 400 includes a security system 202 (e.g. electronic doorbell) that comprises a camera and a button. The camera is configurable to visually detect a visitor. As well, the button is configurable to enable the visitor to sound an electronic chime 412. In this manner, the electronic chime 412 comprises a speaker configurable to emit a notification sound 430 in response to the visitor pressing the button of the security system 202 .

The doorbell system 400 also includes an electronic switch assembly 410 electrically coupled to the security system 202 and a transformer 424. As well, the electronic chime 412 is electrically coupled to the electronic switch assembly 410. In other disclosures, the electronic chime 412 may also be mechanically coupled to the electronic switch assembly 410.

It should be appreciated that the electronic switch assembly 410 also may be referred to as a printed circuit board. The printed circuit board may be configured to enable the electronic chime 412 to emit the notification sound 430 from the speaker based on digital music data.

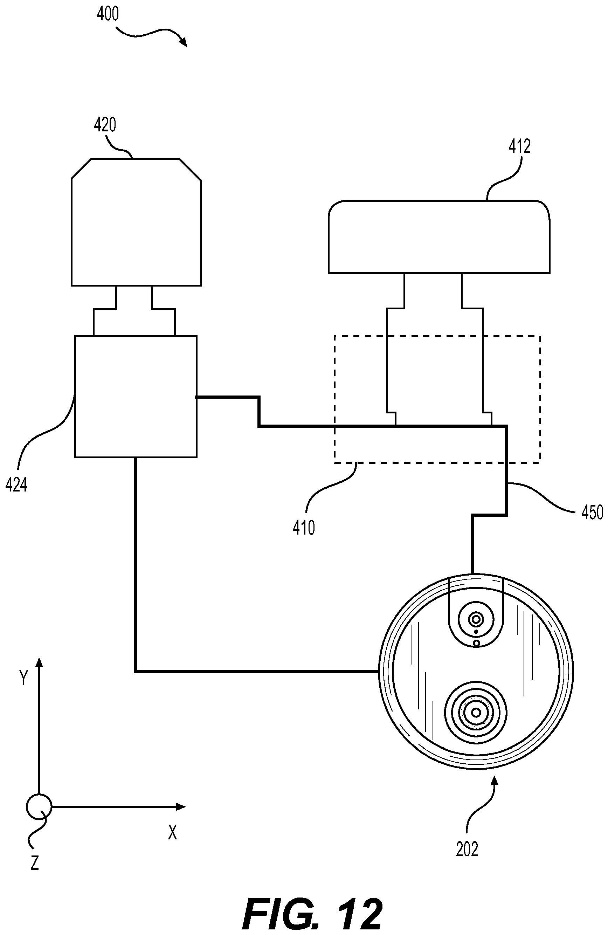

With reference to Figures 12, 13, 15, 16, 18 and 19, the electronic switch assembly 410 may define a first state and a second state. The first state occurs in response to a first electricity 450 that is less than a first threshold. In the first state the electronic switch assembly 410 blocks the first electricity 450 from passing through the electronic chime 412 so the electronic chime 412 does not emit the notification sound 430. Stated differently, the printed circuit board may be configured to block the first electricity 450 that is less than the first threshold from entering the electronic chime 412. In this regard, the electronic switch assembly 410 allows the first electricity 450 to pass through the electronic switch assembly 410 from the security system 202 through the electronic switch assembly 410 to the transformer 424, without entering the electronic chime 412. It should be appreciated that the first threshold may be the amount of electricity required to activate the electronic chime 412 to emit the notification sound 430.

Furthermore, the second state occurs in response to a second electricity 452 that is greater than the first threshold. In the second state the electronic switch assembly 410 allows the second electricity 452 to pass through the electronic chime 412 so that the electronic chime 412 emits the notification sound 430. In other words, the electronic switch assembly 410, or printed circuit board, may be configured to allow the second electricity 452 that is greater than the first threshold to enter the electronic chime 412. The second electricity 452 may cause the electronic chime 412 to emit the notification sound 430.

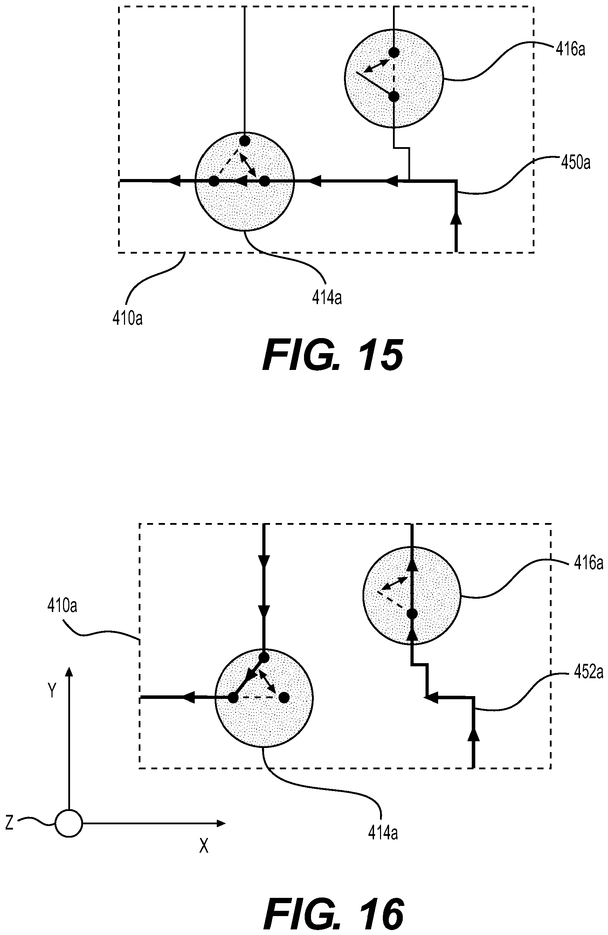

Some embodiments may implement switches to execute routing the first electricity 450 and second electricity 452. For example, as illustrated in Figures 14-16, the electronic switch assembly 410 may comprise a first electronic switch 414a and a second electronic switch 416a that is electrically coupled to the first electronic switch 414a. The first and second switches 414a and 416a may perform different functions in response to receiving the first electricity 450a or the second electricity 452a. For example, and as illustrated in Figure 15, in response to the first electricity 450a, the first electronic switch 414a may allow the first electricity 450a to flow through the electronic switch assembly 410a and may not allow the first electricity 450a to flow through the electronic chime 412. As well, in response to the first electricity 450a, the second electronic switch 416a does not allow the first electricity 450a to flow through the electronic chime 412. Furthermore, as illustrated in Figure 16, in response to the second electricity 452a, the first and second electronic switches 414a and 416a allow the second electricity 452a to flow through the electronic chime 412.

As further illustrated in Figures 15 and 16, the first and second switches 414a and 416a may be configured to implement different operations based on their respective positions. For example, as illustrated in Figure 15, when the first electronic switch 414a is in a first position, the first electronic switch 414a may electrically connect the transformer 424 and the security system 202. Likewise, as illustrated in Figure 16, when the first electronic switch 414a is in a second position, the first electronic switch 414a may electrically connect the transformer 424 and the electronic chime 412.

In some embodiments, the locations of the first and second switches 414a and 416a may be reversed, as such, when the first electronic switch 414a is in the second position, the first electronic switch 414a may electrically connect the electronic chime 412 and the security system 202. However, it should be appreciated that even in a reverse configuration, the first and second switches 414a and 416a may effectively achieve the same objective as that illustrated and described with respect to Figures 15 and 16.

With reference to Figure 15, when the second electronic switch 416a is in an open position, the second electronic switch 416a may electrically disconnect the security system 202 and the electronic chime 412. When the second electronic switch 416a is in the open position, the second electronic switch 416a does not allow the first electricity 450a to flow to the electronic chime 412. As shown in Figure 16, when the second electronic switch 416a is in a closed position, the second electronic switch 416a may electrically connect the security system 202 and the electronic chime 412. In this position, the second electronic switch 416a may allow the first electricity 450a to flow to the electronic chime 412. As well, in some embodiments, when the second electronic switch 416a is in the open position, the second electronic switch 416a may electrically disconnect the transformer 424 and the electronic chime 412. Accordingly, when the second electronic switch 416a is in the closed position, the second electronic switch 416a may electrically connect the transformer 424 and the electronic chime 412.

The position of the first and second switches 414a and 416a, may be dependent on the position of the other switch. For example, as shown in Figure 15, when the first electronic switch 414a is in the first position, the second electronic switch 416a may be in the open position. Furthermore, as illustrated in Figure 16, when the first electronic switch 414a is in the second position, the second electronic switch 416a may be in the closed position.

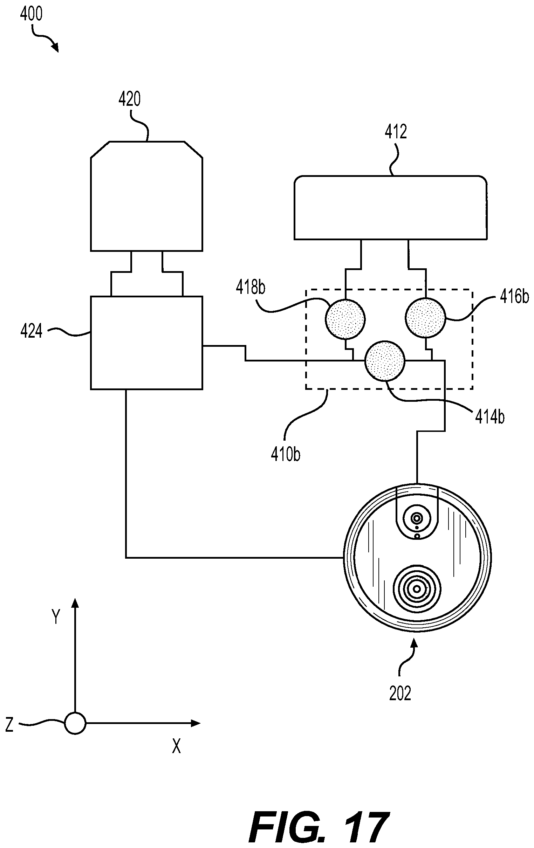

While some embodiments may implement two electronic switches, it should be appreciated that any number of electronic switches less than or greater than two may be implemented. For example, as illustrated in Figures 17-19, the electronic switch assembly 410b may comprise a first electronic switch 414b, a second electronic switch 416b electrically connected to the first electronic switch 414b, and a third electronic switch 418b electrically connected to the first and second electronic switches 414b and 416b.

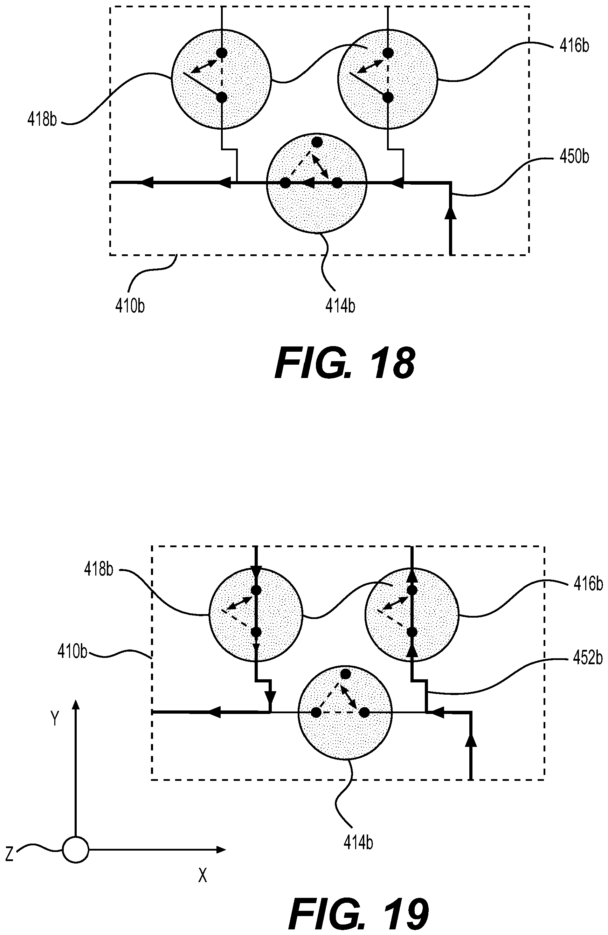

Similar to the two-switch embodiment, the first, second and third switches 414b, 416b and 418b may move to various positions in response to receiving the first electricity 450b or the second electricity 452b. For example, with reference to Figure 18, in response to the first electricity 450b, the first electronic switch 414b may allow the first electricity 450b to flow through the electronic switch assembly 410b and may not allow the first electricity 450b to flow to the electronic chime 412. As well, the second and third electronic switches 416b and 418b may not allow the first electricity 450b to flow to the electronic chime 412. With reference to Figure 19, in response to the second electricity 452b, the first electronic switch 414b may not allow the second electricity 452b to flow through the electronic switch assembly 410b, and the second and third electronic switches 416b and 418b may allow the second electricity 452b to flow through the electronic chime 412.

Similar to the two-switch example as illustrated in Figures 14-16, the first, second and third switches 414b, 416b and 418b may be configured to implement different operations based on their respective positions. For example, as illustrated in Figure 18, when the first electronic switch 414b is in a closed position, the first electronic switch 414b electrically connects the transformer 424 and the security system 202. Likewise, as illustrated in Figure 19, when the first electronic switch 414b is in an open position, the first electronic switch 414b electrically disconnects the transformer 424 and the security system 202.

With continued reference to Figure 19, when the second electronic switch 416b is in a closed position, the second electronic switch 416b electrically connects the transformer 424 and the electronic chime 412. Now with reference to Figure 18, when the second electronic switch 416b is in an open position, the second electronic switch 416b electrically disconnects the transformer 424 and the electronic chime 412.

As illustrated in Figure 19, when the third electronic switch 418b is in a closed position, the third electronic switch 418b electrically connects the security system 202 and the electronic chime 412. Furthermore, as shown in Figure 18, when the third electronic switch 418b is in an open position, the third electronic switch 418b electrically disconnects the security system 202 and the electronic chime 412.

As well, the position of the first, second and third switches 414b, 416b and 418b, may be dependent on the position of the other switch(s). For example, as shown in Figure 18, when the first electronic switch 414b is in the closed position, the second and third electronic switches 416b and 418b may each be in the open position. Furthermore, as illustrated in Figure 19, when the first electronic switch 414b is in the open position, the second and third electronic switches 416b and 418b each may be in the closed position.

It should be appreciated that the first electronic switch 414a and the second electronic switch 416a may comprise any electrical component configured to route electricity or limit the amount of electricity flow, such as a resistor. For example, in some embodiments, such as the two-switch embodiment illustrated in Figures 14-16, the first electronic switch 414a may comprise a double pole, single throw switch, and the second electronic switch 416a may comprise a single pole, single throw switch. As well, in some embodiments, such as the three-switch embodiment, the first, second and third electronic switches 414b, 416b and 418b may each comprise a single pole, single throw switch.

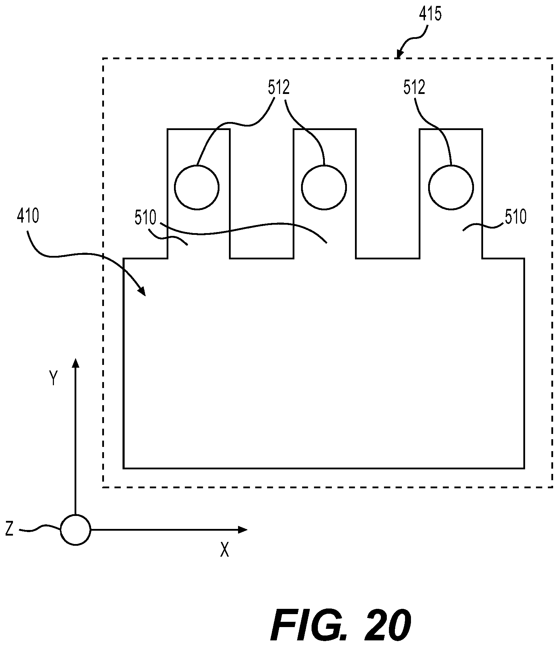

The electronic switch assembly 410, or the printed circuit board, may be arranged and configured in various sizes and geometries. For example, as illustrated in Figure 20, the electronic switch assembly 410 may comprise a base portion that defines a length that extends along a first direction X and a width that extends along a second direction Y that is opposite the first direction X. In some embodiments, the electronic switch assembly 410 may define a rectangular shape, wherein the length is greater than the width. As well, in some embodiments the electronic switch assembly 410 may further include three tabs 510 that may extend from the length along the second direction Y. As such, electronic switch assembly 410 embodiments viewed from the top down may appear to have a footprint of a capital "E." However, it should be appreciated that the electronic switch assembly 410 may be arranged and configured to define any shape.

With continued reference to Figure 20, each of the three tabs 510 may include an aperture 512 that extends through each of the three tabs 510 along a third direction Z that is opposite the first direction X and the second direction Y. Each of the apertures 512 may be configured to receive a threaded fastener. In this manner, the electronic switch assembly 410 may be mechanically coupled to the electronic chime 412 via three threaded fasteners. In other words, each of the threaded fasteners may extend through a respective aperture 512 and mechanically engage the electronic chime 412 to mechanically couple the electronic switch assembly 410 to the electronic chime 412. It should be appreciated that electronic switch assembly 410 may include any number of apertures less than or greater than three and, accordingly, may be mechanically fastened to the electronic chime 412 via any number of mechanical fasteners, such as threaded fasteners, or the like.

In some embodiments, the doorbell system comprises a housing and the electronic chime 412 and the electronic switch assembly 410 are located inside the housing. As well, the security system 202 may be located outside of the housing, in a remote location relative to the housing. For example the security system 202 may be located adjacent a doorway or an entry or point of a building, such as along an exterior wall adjacent a door. However, it should be appreciated that either or both the security system 202 and the housing may be located inside or outside the building. As well, in some embodiments, the housing is a plastic housing. However, it should be appreciated that the housing may comprise any type of material configured to safely house electronic components inside or outside a building.

As well, several embodiments further include a remote computing device 204. The remote computing device can be configured to send and receive information to and from the security system 202. In several embodiments, the information may include the first threshold. For example, the remote computing device 204 may be used to adjust the level of the first threshold. For example, if the user wishes to adjust the first threshold from 12 volts to 14 volts, the user may do so by using the remote computing device 204. As well, the remote computing device 204 may be used to change the first threshold to voltage, current, power, or the like. In this regard, the switch assembly 410 may include logic circuitry so it can be programmed according to the information as established by the remote computing device 204.

As well, in several embodiments, the information may include a predetermined amount of time that the second electricity is maintained above the first threshold. In other words, the predetermined amount of time may determine the amount of time the electronic chime 412 emits the notification sound 430. For example, if the notification sound 430 is a song, the predetermined amount of time may determine the amount of time that the song plays when a visitor has pressed the button of the security system 202. It should be appreciated that the predetermined amount of time may be any amount of time, such as 3 seconds, 5 seconds, 10 seconds, 30 seconds, 60 seconds, or any other amount of time.

### ELECTRICITY ROUTING METHODS

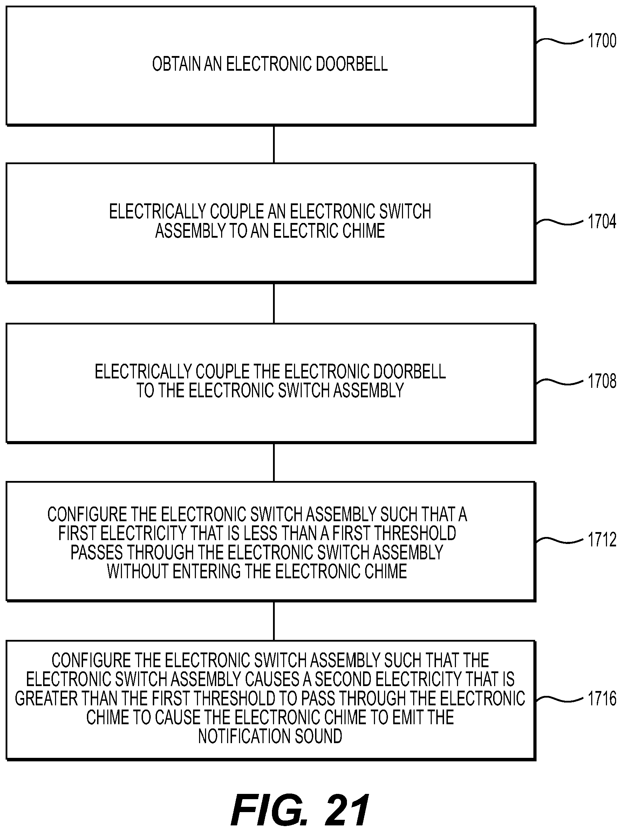

Many embodiments utilize the doorbell system embodiments as previously described. For example, several disclosures include a method for using a doorbell system. The doorbell system may include an electronic doorbell, an electronic chime, and a remote computing device. As illustrated in Figure 21, the method may include obtaining the electronic doorbell (or security system 202) that comprises a camera and a button (at step 1700). The button may be configurable to enable a visitor to sound an electronic chime 412. The electronic chime 412 may include a speaker configurable to emit a notification sound 430 in response to the visitor pressing the button of the electronic doorbell 202. The method may also include electrically coupling an electronic switch assembly 410 to the electronic chime 412 (at step 1704). The the method also may include mechanically coupling the electronic switch assembly 410 to the electronic chime 412.

Furthermore, the method may include electrically coupling the electronic doorbell 202 to the electronic switch assembly 410 (at step 1708). As well, some methods may include configuring the electronic switch assembly 410 so a first electricity 450 that is less than a first threshold passes through the electronic switch assembly 410 without entering the electronic chime 412 (at step 1712). In this manner, the first electricity 450 may not cause the electronic chime 412 to emit the notification sound 430. As such, in response to the first electricity being less than the first threshold, the electronic switch assembly 410 may block the first electricity 450 from passing through the electronic chime 412.

Some methods may further include configuring the electronic switch assembly 410 so the electronic switch assembly 410 causes a second electricity 452 that is greater than the first threshold to pass through the electronic chime 412 (at step 1716). In this manner, the second electricity 452 may cause the electronic chime 412 to emit the notification sound 430. The electronic switch assembly 410 may be configured to allow the second electricity 452 to pass through the electronic chime 412 in response to the second electricity 452 being greater than the first threshold. It should be appreciated that the first threshold may be an electricity value that is required by the electronic chime 412 in order to emit the notification sound 430.

It should be appreciated that methods described in this disclosure are not limited to the first and second electricity 450 and 452. For example, several methods may further include a third and a fourth electricity. Some methods include configuring an electrical circuit, such as the doorbell system 400, so that the third electricity passes from the transformer 424 to the security system 202, and to the electronic switch assembly 410, and then to the transformer 424 without entering the electronic chime 412 in response to the third electricity being less than first threshold. As well, several methods include configuring the electrical circuit so that a fourth electricity passes from the transformer 424 to the security system 202 and to the electronic switch assembly 410 in response to the fourth electricity being greater than the first threshold. In this manner, the fourth electricity may be diverted from the electronic switch assembly 410 into the electronic chime 412, and then back into the electronic switch assembly 410. It should be appreciated that the security system 202 and the electronic switch assembly 410 may be connected in series in the electrical circuit. However, it should also be appreciated that the security system 202 and the electronic switch assembly 410 may be connected in parallel.

The electronic chime 412 may comprise any type of digital device configured to emit a notification sound 430 in response to the visitor pressing the button of the security system 202. For example, the electronic chime 412 may be a digital chime having a first printed circuit board. The method may further include configuring the first printed circuit board to enable the electronic chime 412 to emit the notification sound 430 from the speaker based on digital music data.

When the visitor presses the button of the security system 202, the security system 202 may be configured to route all electricity to the electronic chime 412 via the electronic switch assembly 410. To accomplish this, the security system 202 may further comprise a second printed circuit board. In some embodiments, the method may further include routing at least a portion of the first electricity 450 through the second printed circuit board of the security system 202. In response to the visitor pressing the button, the method may further include blocking the second electricity 452 from entering the second printed circuit board of the security system. In order to cause the electronic chime 412 to emit the notification sound 430, the method may include causing the second electricity 452 to be greater than the first threshold in response to the visitor pressing the button of the security system 202.

The doorbell system 400, via the electronic switch assembly 410, is configured to block the first electricity 450 from entering the electronic chime 412 when the first electricity 450 is less than the first threshold. Specifically, the method may include using the electronic switch assembly 410 to block transformer electrical power from entering the electronic chime 412 while the first electricity 450 is less than the first threshold. As well, the method may include using the electronic switch assembly 410 to divert the transformer electrical power from the electronic switch assembly 410 into the electronic chime 412 while the second electricity 452 is greater than the first threshold.

It should be appreciated that the first threshold may be any type of electricity, such as power, voltage, and/or current. In this regard the first threshold may be described as a first electrical power threshold, a first electrical voltage threshold, and/or a first electrical current threshold.

The doorbell system 400 may also include the remote computing device 204, which can be used to send and receive information to and/or from the security system 202. For example, the information may include a predetermined amount of time that defines the duration of time the electronic chime 412 emits the notification sound 430. In this regard, some embodiments may further include setting the predetermined amount of time via the remote computing device 204 prior to the second electricity 452 exceeding the first threshold. As well, the method may include receiving a predetermined amount of time from a user on the remote computing device and sending the predetermined amount of time wirelessly from the remote computing device 204 to the security system 202. Once the second electricity 452 is greater than the first threshold, the method may further include maintaining the second electricity 452 above the first threshold for the predetermined amount of time.

In some embodiments, the doorbell system 400 comprises a housing, such as a plastic housing. Accordingly, the method may further include placing the electronic chime 412 and the electronic switch assembly 410 inside the plastic housing. As well, the method may include placing the security system 202 outside the plastic housing and in a remote location relative to the plastic housing. Some methods may further include mounting the plastic housing along an interior surface of the building and mounting the security system 202 along an exterior surface of the building near an entry point of the building. However, it should be appreciated that the plastic housing and/or the security system 202 may be mounted anywhere along an interior or exterior surface of the building.

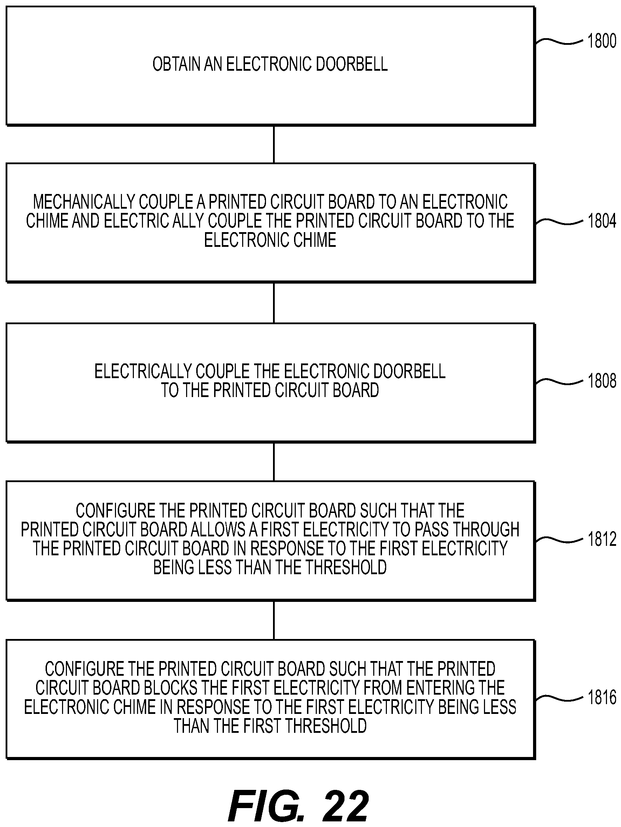

As illustrated in Figure 22, there is disclosed another method for using the doorbell system 400. The method may include obtaining the security system 202 (at step 1800). The method may also include mechanically coupling a printed circuit board 410 to the electronic chime 412 and electrically coupling the printed circuit board 410 to the electronic chime 412 (at step 1804). As well, some methods include electrically coupling the security system 202 to the printed circuit board 410 (at step 1808).

Several methods may include configuring the printed circuit board 410 so that the printed circuit board 410 allows a first electricity 450 to pass through the printed circuit board 410 in response to the first electricity 450 being less than the first threshold (at step 1812). As well, the method may include configuring the printed circuit board 410 so that the printed circuit board 410 blocks the first electricity 450 from entering the electronic chime 412 in response to the first electricity 450 being less than the first threshold (at step 1816). Accordingly, the first electricity 450 does not cause the electronic chime 412 to emit the notification sound 430.

Several embodiments may further include configuring the printed circuit board 410 so that the printed circuit board 410 causes a second electricity 452 that is greater than the first threshold to enter the electronic chime 412 to cause the electronic chime to emit the notification sound 430. As such, the printed circuit board 410 may cause the second electricity 452 to pass through the electronic chime 412 in response to the second electricity 452 being greater than the first threshold.

Furthermore, the printed circuit board 410 may be described as a first printed circuit board, and the security system 202 may comprise a second printed circuit board. Similar to the method illustrated in Figure 21, the method disclosed in Figure 22 may further include routing at least a portion of the first electricity 450 through the second printed circuit board of the security system 202. As well, the method may further include configuring the first printed circuit board or the second printed circuit board to block the second electricity 452 from entering the second printed circuit board of the security system 202 in response to the visitor pressing the button. Stated differently, these steps may allow all of the transformer electrical power to be blocked from entering the security system 202 and diverted to the electronic chime 412 so the chime may have enough electrical power to emit the notification sound 430.

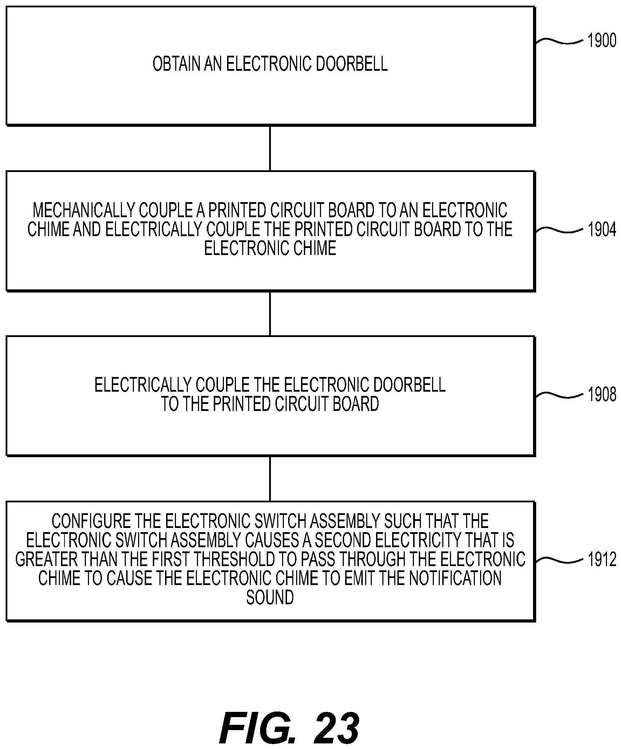

Also disclosed is yet another method for using the doorbell system 400. As illustrated in Figure 23, the method includes obtaining the security system 202 (at step 1900). Similar to the methods illustrated in Figure 21, many embodiments also include mechanically coupling the printed circuit board 410 to the electronic chime 412 and electrically coupling the printed circuit board 410 to the electronic chime 412 (at step 1904). As well, several methods include electrically coupling the security system 202 to the printed circuit board 410 (at step 1908). With continued reference to Figure 22, in response to the second electricity 452 being greater than the first threshold, many embodiments also include configuring the electronic switch assembly 410 so that the electronic switch assembly 410 causes the second electricity 452 to pass through the electronic chime 412 to cause the electronic chime 412 to emit the notification sound 430 (at step 1912).

### VISITOR DETECTION

Referring now to Figures 1 and 3, methods can include using a doorbell (e.g., security system 202) that is configurable to wirelessly communicate with a remotely located computing device 204, such as a cellular telephone, laptop, or tablet. Some methods include obtaining a doorbell that comprises a speaker, a microphone, a camera, and a button. In some methods, the camera acts as a motion sensor. A doorbell can include an infrared motion detection system (e.g., motion detector 218). The button 212 of the doorbell can be configurable to enable a visitor to sound a chime 302 (e.g., a speaker or another sound emission device located inside of a building). Some chimes are digital and some chimes are mechanical.

Several methods include using a doorbell system (e.g., communication system 200) to detect a first visitor. The doorbell system comprises a doorbell and a remote computing device 204 such as a smartphone, laptop, tablet, or desktop computer. Some methods include obtaining the doorbell that comprises a camera, a speaker, a microphone, and a button, wherein the button is configurable to enable the first visitor to sound a chime.

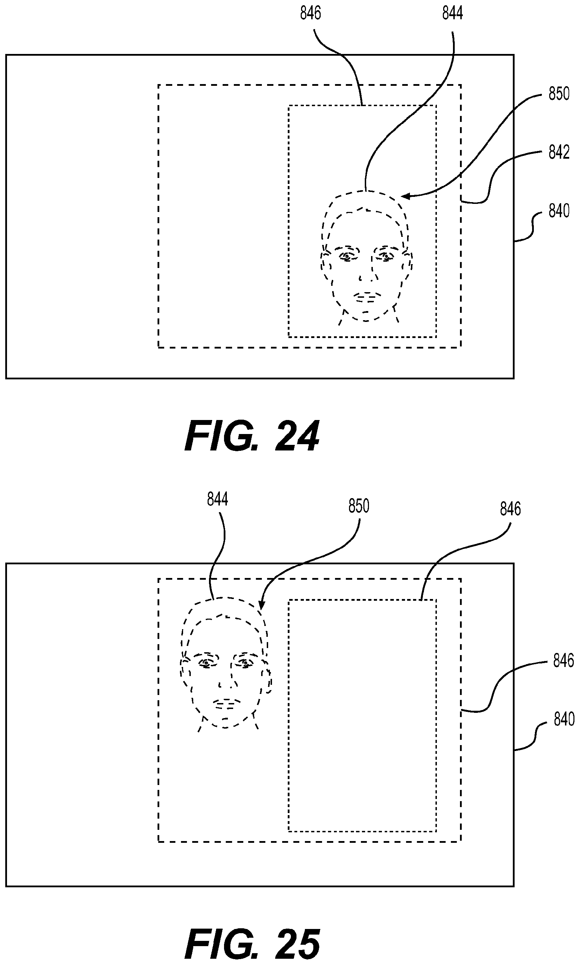

Figure 24 illustrates a camera's field of view 840. Methods can include configuring the camera of the doorbell such that the camera comprises a field of view 840, and using the camera of the doorbell to take a first image 842. The doorbell system can send the first image 842 from the doorbell to the remote computing device, which can comprise an electronic display 242 (shown in Figure 2). Some methods include displaying the first image 842 on the electronic display 242 of the remote computing device, and prompting a user of the remote computing device to select a first detection zone 846 within the first image 842. The first detection zone 846 can comprise a portion of the first image 842. The first image 842 can comprise all or a portion of the camera's field of view 840.

In Figure 24, the visitor 844 is located inside of the detection zone 846. An indication 850 of the visitor 844 is also located inside of the detection zone 846. The indication 850 can be any evidence or data that suggests the presence of the visitor 844. In Figure 25, the visitor 844 and the indication 850 are located outside of the detection zone 846 in a second image 846. The first image 842 (shown in Figure 24) and the second image 846 can show the same area (e.g., can include the same portion of the field of view 840). The detection zone 846 can consist of the same area (e.g., of an entryway) in both the first image 842 and the second image 846. In some embodiments, the first image 842 does not include a visitor 844 to help calibrate the system to a visitor-free state.

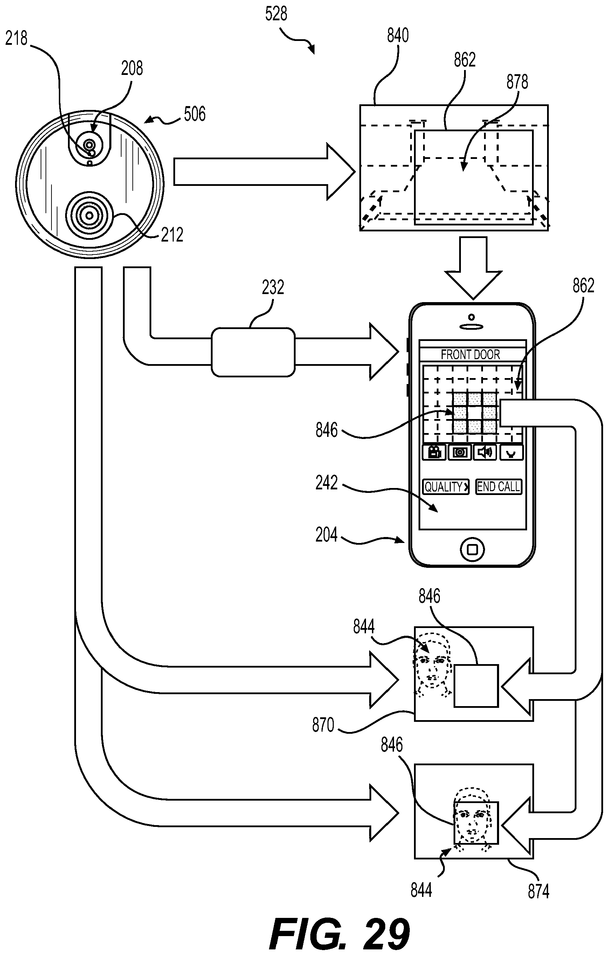

Some methods include using the camera of the doorbell to take a second image, analyzing the second image to detect a first indication of the first visitor, and detemiining that the first indication of the first visitor in the second image is located outside of the first detection zone. The doorbell system can then decide to not send an alert 232 (shown in Figure 29) to the remote computing device in response to determining that the first indication of the first visitor in the second image is located outside of the first detection zone. The alert 232 can be configured to notify the remote computing device 204 (shown in Figure 29) regarding a presence of the first visitor.

Analyzing the second image can include determining if there are signs of seeing the visitor in the second image. In some methods, the system looks for indications of motion in the image. In several methods, the system compares a baseline image (e.g., the first image) to the second image in order to determine if there are areas in the second image that include an object (e.g., a visitor) that was not present in the first image. Thus, some methods use computer vision to identify the presence of a visitor within the detection zone.

Several methods include using the camera of the doorbell to take a third image and analyzing the third image to detect a second indication of the first visitor. Methods can include determining the second indication of the first visitor in the third image is located inside of the first detection zone, and then sending the alert to the remote computing device in response to determining that the second indication of the first visitor in the third image is located inside of the first detection zone. In some methods, the alert is not sent unless other conditions are met.

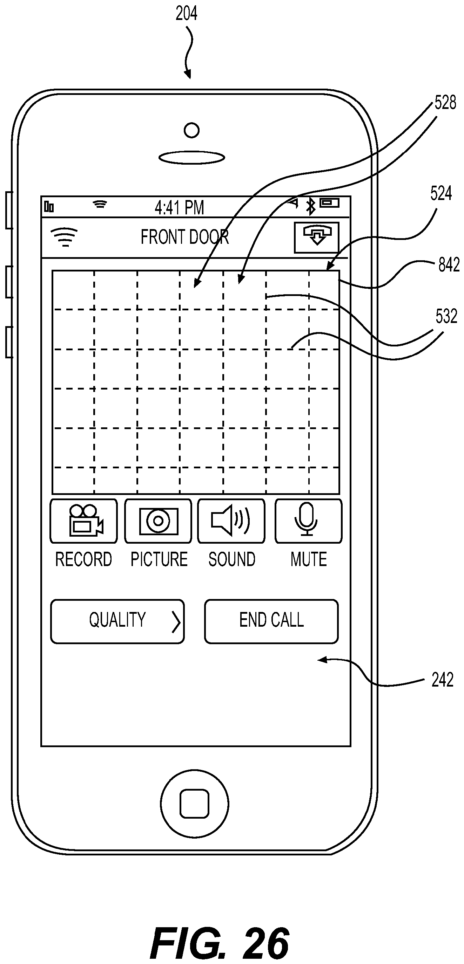

Figure 26 illustrates a front view of a remote computing device 204 displaying a grid pattern 254 on an image 842. Some embodiments include displaying a grid pattern 254 on the first image 842 on the electronic display 242 of the remote computing device 204 such that the first image 842 is divided into sections 528 by lines 532 that cross each other. (Not all sections 528 and lines 532 are labeled in Figures 26-29 to increase the clarity of various features.)

The lines 532 can include horizontal lines and vertical lines that intersect at 90-degree angles. The lines can be straight, curved, and/or wavy. The sections can be equal in size and shape. The sections can be irregular and can vary in size. Methods can include preventing the sending of the alert to the remote computing device until after detecting an indication of a visitor in at least two, four, and/or eight of the sections. Methods can include preventing the sending of the alert to the remote computing device until after detecting an indication of a visitor in at least twenty percent and/or forty percent of the sections (e.g., of a detection zone).

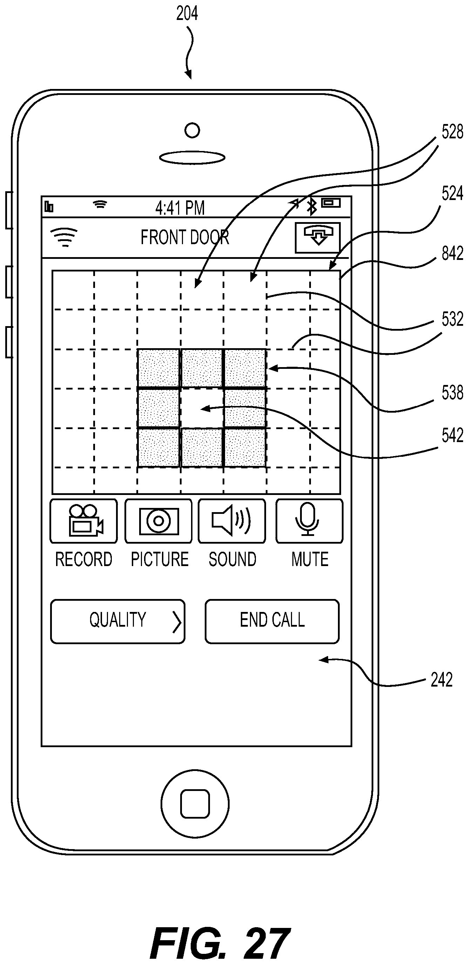

Figure 27 illustrates a subset 538 of the sections 528 that have been selected as part of a detection zone. Several methods include selecting the first detection zone within the first image 842 by the user touching at least a first subset 538 of the sections 528 on the electronic display 242 of the remote computing device 204. Touching the first subset 538 can cause the first subset 538 to be included in the first detection zone. The electronic display 242 can be a touchscreen of a computer such as a smartphone, tablet, or laptop. The user of the remote computing device 204 can swipe the touchscreen to select a detection zone.

Touching or clicking on each section is not necessary in some embodiments. Some methods include causing a second subset 542 of the sections to be included in the first detection zone in response to the first subset 538 comprising an outer perimeter that surrounds the second subset 542. For example, the user can swipe the touchscreen to form a closed shape. All sections at least partially located within the closed shape can be included in the first detection zone.

Some embodiments include two, three, four, and/or many detection zones, which can be independent, interdependent, separate, and/or overlapping. Detecting a visitor in a first detection zone can lead to immediately notifying the user of the remote computing device. Detecting a visitor in a second detection zone can include additional safeguards against false-positives.

Several methods include selecting the first detection zone by displaying the first image on the electronic display and then recording which areas (e.g., sections 528) of the first image the user indicates to include in the first detection zone by touching the electronic display. Some methods include calculating a percentage of the first detection zone that includes the second indication of the first visitor. The percentage can be a percentage of the area of the detection zone or can be a percentage of the sections. Methods can include sending the alert to the remote computing device in response to determining that the percentage of the detection zone exceeds a first threshold. The first threshold can be 10 percent or 30 percent.

Some methods include sending a picture of a visitor to the remote computing device, and then waiting to open audio and/or video communication between the visitor and the user of the remote computing device until after determining a percentage of the first detection zone that includes an indication of the visitor and calculating a time in which the indication of the visitor has been in the first detection zone. Embodiments can include opening the audio communication between the visitor and the user of the remote computing device in response to the percentage of the detection zone and the time. The percentage can be at least 10 percent and/or at least 25 percent. The time can be at least one second and/or at least four seconds.

Indications of the visitor can be motion indications. Motion indications can be identified by comparing a baseline image to another image. The baseline image can be taken when a visitor is not present. Other indications of the visitor can include presence indications (e.g., indications that at least a portion of the visitor is present in the section being analyzed). In some methods, the second indication comprises the motion indication.

Some methods include selecting the first detection zone by displaying the first image on the electronic display and then recording which areas of the first image the user indicates to include in the first detection zone by touching the electronic display. The remote computing device can prompt the user to select areas and/or sections to include in a detection zone. In some methods, the remote computing device does not display a grid on the calibration image, but the remote computing device prompts the user to select a portion of the image as the detection zone and/or prompts the user to select a portion of the image to exclude from the detection zone.

Several methods include calculating a percentage of the first detection zone that includes the second indication of the first visitor and/or calculating a time in which the second indication of the first visitor has been in the first detection zone. Methods can include sending the alert to the remote computing device in response to the percentage of the detection zone and the time.

The images used in several methods do not include the entire field of view of the camera of the doorbell. In some methods, the field of view comprises a portion, and the first image, the second image, and the third image consist of the portion of the field of view. Methods can further comprise selecting the portion of the field of view.

The portion of the field of view can be consistent between the calibration image and subsequent images to help the system accurately analyze the images. In some methods, the first image, the second image, and the third image consist of at least a portion of the field of view, wherein the method further comprises analyzing the portion of the field of view.

Referring now to Figure 3, although doorbells can be used anywhere, optionally, the camera of the doorbell is configured to record a portion of an entryway 310, wherein the first image, the second image, and the third image show the portion of the entryway 310.

In some embodiments, the doorbell (e.g., 202) and the remote computing device 204 are not physically coupled. Methods can include wirelessly sending the first image from the doorbell to the remotely located computing device. Some embodiments include sending the first image directly from the doorbell to the remote computing device without an intermediary server (e.g., 206 in Figure 1). This direct transmission can be via wires or can be wireless. Several embodiments include intermediary servers that enable the doorbell to communicate with the remote computing device via the Internet.

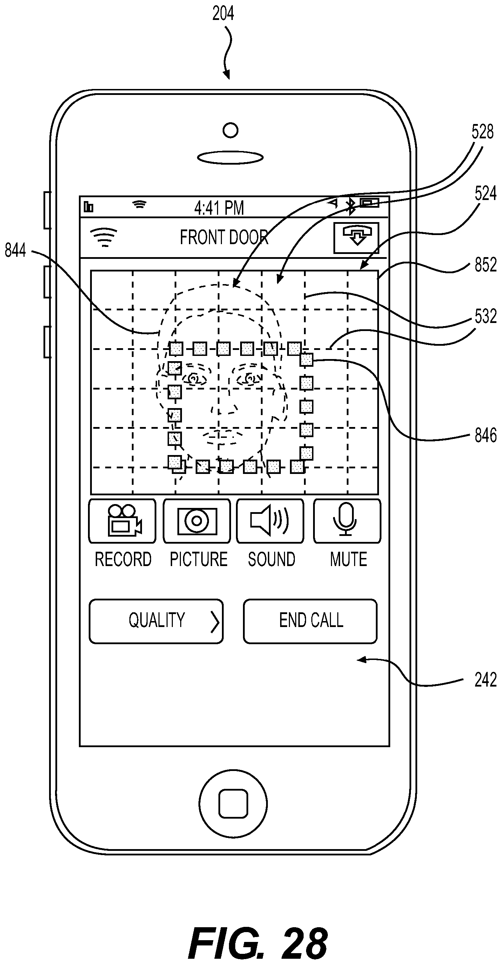

Figure 28 illustrates a visitor 844 in a second image 852. The visitor is partially in the detection zone 846 (which was explained in the context of Figure 27). The detection zone 846 was defined by selecting the subsets 538, 542 in Figure 27. By analyzing the detection zone 846, the system can detect indications of the visitor 844. The system can ignore visitor indications located outside of the detection zone 846. Visitor indications can include motion and/or infrared signatures indicative of humans. In some embodiments, the system analyzes an image to identify shapes indicative of humans.

Methods for using a doorbell system to detect a first visitor can include obtaining the doorbell that comprises a camera and a button. The camera can be configured such that the camera has a field of view. Several methods include using the camera of the doorbell to take a first image to calibrate the doorbell system and sending the first image from the doorbell to the remote computing device. Some methods include displaying the first image on the electronic display of the remote computing device. Several methods include prompting a user of the remote computing device to select a first detection zone within the first image. The first detection zone can comprise at least a portion of the first image. Methods can include configuring the doorbell system to ignore a second visitor located within the field of view but located outside of the first detection zone.

The system can ignore a visitor by not sending an alert regarding the visitor to the remote computing device. The system does not send an alert to the remote computing device in response to the presence of the visitor outside of the detection zone but inside of the field of view of the camera and/or inside of the image. Even when the system ignores a visitor, the system can record the visitor for future reference by the user. The user can then request to see visitors who were inside of the field of view but not shown via alerts (because they were ignored due to being located outside of the detection zone). Thus, the system can ignore the visitor in response to the presence of the visitor outside of the detection zone, but the system can later provide information regarding the visitor to the user in response to a user's request. Sending an alert can include sending a push notification to a smartphone.

Several methods include configuring the doorbell system to send a picture of a third visitor to the remote computing device in response to determining that the third visitor is located inside of the first detection zone as defined based on the first image. The first detection zone can be a two-dimensional zone rather than a three dimensional area of the physical world. Thus, the detection zone can be decoupled from proximity.

Some method embodiments include enabling audio and/or video communication between a visitor and the user of the remote computing device in response to detecting at least one indication of the visitor in at least two of the sections and/or in at least ten of the sections. In some embodiments, the sections with the detected indications must be adjacent to each other.

Some embodiments include selecting the first detection zone within the first image by prompting the user of the remote computing device to indicate a first area by touching the first area on the electronic display of the remote computing device; recording the first area; and excluding the first area from the first detection zone. Methods can include ignoring a visitor in response to the visitor being located in the first area.

Doorbells can comprise a motion sensor. Some embodiments include an infrared motion sensor. Methods can comprise ignoring the second visitor in response to disabling the motion sensor during a predetermined time period. The predetermined time period can be during certain hours of the day or night. The time period can be when the user is home or away from home (e.g., where the doorbell is mechanically coupled to the home). As used herein, "home" can include any type of stationary structure configured to shelter people (e.g., an office building).

Also disclosed but not claimed is using a doorbell system to detect at least one visitor. Methods can include configuring the camera of the doorbell such that the camera comprises a field of view and using the camera of the doorbell to take a first image to calibrate the doorbell system by establishing a baseline of an entryway. The baseline can be used to define a state without any visitors. Methods can include sending the first image from the doorbell to the remote computing device and displaying the first image on an electronic display of the remote computing device.

Some methods include prompting a user of the remote computing device to select a first detection zone within the first image. The first detection zone can comprise a portion of the first image. The first detection zone can include a two-dimensional representation of an area in which the doorbell system is configured to respond to motion detection. Several embodiments include displaying a grid pattern on the first image on the electronic display of the remote computing device such that the first image is divided into at least six sections by lines that cross each other. In some embodiments, the first image is divided into at least ten sections by lines that cross each other. The system can be configured to identify the first detection zone within the first image by the user choosing at least a first subset of the sections on the electronic display of the remote computing device. Choosing the first subset can cause the first subset to be included in the first detection zone.

Several methods include configuring the doorbell system to ignore a second visitor located within the field of view but located outside of the first detection zone. Some embodiments include configuring the doorbell system to send a picture of a third visitor to the remote computing device in response to at least some of the following factors: (1) determining that the third visitor is located inside of the first detection zone as defined based on the first image, (2) determining that at least a predetermined percentage (e.g., thirty percent) of the first detection zone includes motion indicators, and (3) determining that the first detection zone has included the motion indicators for at least a predetermined amount of time (e.g., three seconds).

Some methods include automatically excluding an area from a detection zone. Automatic exclusion can occur without the user excluding a specific area (even if the user configures settings that later lead to automatic exclusions). In some embodiments, indications indicative of motorized vehicles (e.g., cars, trucks, vans) are automatically excluded from a detection zone. These automatic calibration innovations can take many forms. Several methods include automatically excluding an area from a detection zone in response to detecting an object (e.g., a motorized vehicle) moving through the first detection zone at more than twenty-five miles per hour. Some methods include automatically excluding an area in response to detecting an infrared signal indicative of a motorized vehicle.

Some embodiments include automatically excluding an area from the first detection zone in response to at least some of the following items: (1) detecting an indication of a visitor in a detection zone; (2) enabling audio communication between the doorbell and the remote computing device in response to detecting the indication of the visitor; and (3) using the doorbell to detect an absence of sound indicative of speaking. The area that is excluded can be the area in which the indication was detected.

Figure 29 illustrates a doorbell system 528 that comprises a doorbell 506 (e.g., security system 202) and a remote computing device 204. The doorbell 506 has a camera assembly 208 and a doorbell button 212. Pressing the button 212 cause the chime 302 (shown in Figure 3) to sound (e.g., emit a "ding-dong" sound or another notification sound).

The camera assembly 208 is configured such that it has a field of view 840. The camera assembly 208 can be positioned such that the field of view 840 shows an entryway 878 (as illustrated in Figure 29). The camera assembly 208 can take a first image 862, which can be all or part of the field of view 840. As used herein, phrases such as "take an image" are used in a very broad sense. A picture can be taken and then recorded on any of the items listed herein. Taking a picture can mean that a camera was used as at least one of several items used to capture an image. Taking a picture can be part of taking a video. Thus, an item that takes a video also takes a picture. The camera can be a digital video camera.

The doorbell system 528 can send the first image 862 to a remote computing device 204. The remote computing device 204 can display the first image 862 on an electronic display 242. The remote computing device 204 can prompt a user (of the remote computing device 204) to select at least one detection zone 846 within the first image 862. As illustrated in Figure 29, the detection zone 846 is a portion of the first image 862. Multiple detection zones can overlap or can be separate.

The doorbell system 528 can send data regarding the selected detection zone 846 from the remote computing device 204 to the doorbell 506. The doorbell 506 can then focus on looking for visitors within the detection zone 846 and/or can ignore indications that are suggestive of a visitor if the indications are located outside of the detection zone 846.

In some embodiments, a computer (e.g., server 206 or computing device 204 in Figure 1) that is located remotely from the doorbell 506 analyzes each image. Thus, the computer can apply the detection zone 846 to analyses of images from the doorbell 506 such that the doorbell 506 does not have to receive data regarding the detection zone 846. In some embodiments, the doorbell 506 sends an alert regarding a visitor to the remote computing device 204, but then the computing device 204 (and/or the server 206 in Figure 1) blocks displaying the alert because the alert is from a visitor indication that was outside the detection zone 846.

The camera assembly 208 can be used to take a second image 870. The detection zone 846 selected from the first image 862 can be positioned on the second image 870 such that the detection zone 846 represents the same area in front of the camera assembly 208 in both the first image 862 and the second image 870. For example, the detection zone 846 can focus a visitor detection analysis on the same portion of an entryway in images taken by the camera assembly subsequent to the camera assembly 208 taking the first image 862.

The doorbell system 528 can analyze the detection zone 846 of the second image 870. The doorbell system 528 can be used to analyze the second image 870 to determine whether a first indication of the visitor 844 is located inside of the detection zone 846. In Figure 29, the doorbell system 528 determines that a first indication of the visitor 844 is located outside of the detection zone 846 (because the visitor 844 is located outside of the detection zone 846 in the second image 870). Then, the doorbell system 528 can decide to not send an alert and/or can block sending an alert to the remote computing device 204 in response to determining that the first indication of the visitor 844 is located outside of the detection zone 846.

The doorbell system 528 is configured to notify the remote computing device 204 regarding a presence of the visitor 844 by sending an alert (e.g., a push notification) to the remote computing device 204. Figure 29 illustrates the doorbell 506 sending an alert 232 to the remote computing device 204. The alert 232 can be sent directly from the doorbell 506 to the remote computing device 204. In some embodiments, the alert 232 is sent directly and wirelessly. In some embodiments, the alert 232 is sent via a server and/or via the Internet.

After the second image 870 was taken, the visitor 844 moved into the detection zone 846. The visitor 844 is located at least partially inside the detection zone 846 in the third image 874. The doorbell system 528 can analyze the third image 874 to detect an indication of the visitor 844. The doorbell system 528 can determine that an indication of the visitor 844 is located inside the detection zone 846.

### INTERPRETATION

None of the steps described herein is essential or indispensable. Any of the steps can be adjusted or modified. Other or additional steps can be used. Any portion of any of the steps, processes, structures, and/or devices disclosed or illustrated in one embodiment, flowchart, or example in this specification can be combined or used with or instead of any other portion of any of the steps, processes, structures, and/or devices disclosed or illustrated in a different embodiment, flowchart, or example. The embodiments and examples provided herein are not intended to be discrete and separate from each other.

The section headings and subheadings provided herein are nonlimiting. The section headings and subheadings do not represent or limit the full scope of the embodiments described in the sections to which the headings and subheadings pertain. For example, a section titled "Topic 1" may include embodiments that do not pertain to Topic 1 and embodiments described in other sections may apply to and be combined with embodiments described within the "Topic 1" section.

Some of the devices, systems, embodiments, and processes use computers. Each of the routines, processes, methods, and algorithms described in the preceding sections may be embodied in, and fully or partially automated by, code modules executed by one or more computers, computer processors, or machines configured to execute computer instructions. The code modules may be stored on any type of non-transitory computer-readable storage medium or tangible computer storage device, such as hard drives, solid state memory, flash memory, optical disc, and/or the like. The processes and algorithms may be implemented partially or wholly in application-specific circuitry. The results of the disclosed processes and process steps may be stored, persistently or otherwise, in any type of non-transitory computer storage such as, e.g., volatile or non-volatile storage.

The various features and processes described above may be used independently of one another, or may be combined in various ways. subcombinations are intended to fall within the scope of this disclosure.

The example systems and components described herein may be configured differently than described. For example, elements may be added to, removed from, or rearranged compared to the disclosed example embodiments.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations and so forth. Also, the term "or" is used in its inclusive sense (and not in its exclusive sense) so that when used, for example, to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require at least one of X, at least one of Y, and at least one of Z to each be present.

The term "and/or" means that "and" applies to some embodiments and "or" applies to some embodiments. Thus, A, B, and/or C can be replaced with A, B, and C written in one sentence and A, B, or C written in another sentence. A, B, and/or C means that some embodiments can include A and B, some embodiments can include A and C, some embodiments can include B and C, some embodiments can only include A, some embodiments can include only B, some embodiments can include only C, and some embodiments include A, B, and C. The term "and/or" is used to avoid unnecessary redundancy.

## Claims

1. A doorbell system (400), having a sleep mode, a standby mode and an alert mode comprising:
a remote computing device comprising an electronic display;
an electronic doorbell (506) comprising a camera and a button, wherein the camera is configured to visually detect a visitor and the button is configured to sound an electronic chime (412);
wherein the camera is disabled when the doorbell system is in the sleep mode, enters the standby mode in response to a first indication of a visitor being detected by the electronic doorbell (506), wherein in the standby mode the camera is configured to start recording, and further enters the alert mode in response to a second indication of a visitor being detected by the electronic doorbell (506);
wherein the electronic doorbell (506) records an image using the camera during the alert mode;
the camera comprising a field of view (840) having a detection zone (846), wherein the system is configured to send an image to the remote computing device in response to detecting the visitor in the detection zone of the camera, and to ignore a visitor within the field of view of the camera but outside the detection zone by not sending the image to the remote computing device;
an electronic switch assembly (410) electrically coupled to the electronic doorbell (506) and a transformer (424); and
the electronic chime (412) electrically coupled to the electronic switch assembly (410), wherein the electronic chime (412) comprises a speaker configured to emit a notification sound in response to the visitor pressing the button (212) of the electronic doorbell,
wherein the electronic switch assembly (410) is arranged in a first state and a second state, wherein the first state occurs in response to a first electricity (450) that is less than a first threshold, and the second state occurs in response to a second electricity (452) that is greater than the first threshold, wherein in the first state the electronic switch assembly is configured to block the first electricity from passing through the electronic chime so the electronic chime does not emit a sound notification, and in the second state the electronic switch assembly is configured to allow the second electricity to pass through the electronic chime such that the electronic chime emits the sound notification; and
wherein the second electricity occurs in response to the visitor pressing the button.

2. The doorbell system of Claim 1, wherein the electronic chime comprises a digital chime having a first printed circuit board configured to emit the notification sound from the speaker based on digital music data, and wherein the electronic doorbell comprises a second printed circuit board configured to block the second electricity from entering the second printed circuit board of the electronic doorbell in response to the visitor pressing the button.

3. The doorbell system of Claim 1, wherein in the first state, the electronic switch assembly is configured to allow the first electricity to pass through the electronic switch assembly.

4. The doorbell system of Claim 3, wherein the electronic switch assembly is mechanically coupled to the electronic chime.

5. The doorbell system of Claim 4, wherein the doorbell system comprises a plastic housing, and wherein the electronic chime and the electronic switch assembly are located inside the plastic housing and the electronic doorbell is located outside of the plastic housing and in a remote location relative to the plastic housing.

6. The doorbell system of Claim 5, further comprising a remote computing device configured to receive a predetermined amount of time from a user, wherein the predetermined amount of time defines an amount of time that the second electricity is maintained above the first threshold.

7. The doorbell system of Claim 6, wherein the electronic switch assembly comprises a first electronic switch (414a) and a second electronic switch (416a) that is electrically coupled to the first electronic switch (414a),
wherein in response to the first electricity: 1) the first electronic switch is configured to allow the first electricity to flow through the electronic switch assembly and also configured not to allow the first electricity to flow through the electronic chime, and 2) the second electronic switch is configured not to allow the first electricity to flow through the electronic chime, and
wherein in response to the second electricity, the first and second electronic switches are configured to allow the second electricity to flow through the electronic chime (412).

8. The doorbell system of Claim 7, wherein the first electronic switch comprises a double pole, single throw switch, and the second electronic switch comprises a single pole, single throw switch.

9. The doorbell system of Claim 7, wherein when the first electronic switch is in a first position, the first electronic switch is configured to electrically connect the transformer and the electronic doorbell, and when the first electronic switch is in a second position, the first electronic switch is configured to electrically connect the transformer and the electronic chime, and wherein when the second electronic switch is in an open position, the second electronic switch is configured to electrically disconnect the electronic doorbell and the electronic chime, and when the second electronic switch is in a closed position, the second electronic switch is configured to electrically connect the electronic doorbell and the electronic chime, and wherein when the first electronic switch is in the first position, the second electronic switch is in the open position, and when the first electronic switch is in the second position, the second electronic switch is in the closed position.

10. The doorbell system of Claim 7, wherein when the first electronic switch is in a first position, the first electronic switch is configured to electrically connect the transformer and the electronic doorbell, and when the first electronic switch is in a second position, the first electronic switch is configured to electrically connect the electronic chime and the electronic doorbell, wherein when the second electronic switch is in an open position, the second electronic switch is configured to electrically disconnect the transformer and the electronic chime, and when the second electronic switch is in a closed position, the second electronic switch is configured to electrically connect the transformer and the electronic chime, and wherein when the first electronic switch is in the first position, the second electronic switch is in the open position, and when the first electronic switch is in the second position, the second electronic switch is in the closed position.

11. The doorbell system of Claim 6, wherein the electronic switch assembly comprises a first electronic switch (414b), a second electronic switch (416b) electrically connected to the first electronic switch (414b), and a third electronic switch (418b) electrically connected to the first and second electronic switches,
wherein in response to the first electricity: 1) the first electronic switch is configured to allow the first electricity to flow through the electronic switch assembly and also configured not to allow the first electricity to flow to the electronic chime, and 2) the second and third electronic switches are configured not to allow the first electricity to flow to the electronic chime (412), and
wherein in response to the second electricity: 1) the first electronic switch is configured not to allow the second electricity to flow through the electronic switch assembly, and 2) the second and third electronic switches are configured to allow the second electricity to flow through the electronic chime (412).

12. The doorbell system of Claim 11, wherein the first electronic switch comprises a first single pole, single throw switch, the second electronic switch comprises a second single pole, single throw switch, and the third electronic switch comprises a third single pole, single throw switch.

13. The doorbell system of Claim 11, wherein when the first electronic switch is in a closed position, the first electronic switch is configured to electrically connect the transformer and the electronic doorbell, and when the first electronic switch is in an open position, the first electronic switch is configured to electrically disconnect the transformer and the electronic doorbell, wherein when the second electronic switch is in a closed position, the second electronic switch is configured to electrically connect the transformer and the electronic chime, and when the second electronic switch is in an open position, the second electronic switch is configured to electrically disconnect the transformer and the electronic chime, and wherein when the third electronic switch is in a closed position, the third electronic switch is configured to electrically connect the electronic doorbell and the electronic chime, and when the third electronic switch is in an open position, the third electronic switch is configured to electrically disconnect the electronic doorbell and the electronic chime.

14. The doorbell system of Claim 12, wherein when the first electronic switch is in the closed position, the second and third electronic switches are each in the open position, and wherein when the first electronic switch is in the open position, the second and third electronic switches are each in the closed position.

## Patentansprüche

1. Türklingelsystem (400) mit einem Schlafmodus, einem Stand-by-Modus und einem Warnmodus, umfassend:
eine entfernt gelegene Rechnervorrichtung umfassend eine elektronische Anzeige;
eine elektronische Türklingel (506) umfassend eine Kamera und eine Taste, wobei die Kamera konfiguriert ist, visuell einen Besucher zu erkennen, und die Taste konfiguriert ist, ein elektronisches Glockenspiel (412) ertönen zu lassen;
wobei die Kamera deaktiviert ist, wenn das Türklingelsystem im Schlafmodus ist, in den Stand-by-Modus übergeht in Antwort auf eine erste Indikation, dass ein Besucher von der elektronischen Türklingel (506) erkannt worden ist, wobei im Stand-by-Modus die Kamera konfiguriert ist, eine Aufzeichnung zu starten, und ferner in den Warnmodus übergeht in Antwort auf eine zweite Indikation, dass ein Besucher von der elektronischen Türklingel (506) erkannt worden ist;
wobei die elektronische Türklingel (506) unter Verwendung der Kamera während des Warnmodus ein Bild aufnimmt;
wobei die Kamera ein Gesichtsfeld (840) mit einer Erkennungszone (846) aufweist, wobei das System konfiguriert ist, ein Bild an die entfernt gelegene Rechnervorrichtung zu senden in Antwort auf das Erkennen des Besuchers in der Erkennungszone der Kamera, und einen Besucher innerhalb des Gesichtsfeldes aber außerhalb der Erkennungszone zu ignorieren, indem das System kein Bild an die entfernt gelegene Rechnervorrichtung sendet;
eine elektronische Schalterbaugruppe (410), die elektrisch an die elektronische Türklingel (506) und einen Transformator (424) gekoppelt ist; und
wobei das elektronische Glockenspiel (412) elektrisch an die elektronische Schalterbaugruppe (410) gekoppelt ist, wobei das elektronische Glockenspiel (412) einen Lautsprecher umfasst, der zum Aussenden eines Benachrichtigungstons in Antwort auf das Drücken der Taste (212) der elektronischen Türklingel durch den Besucher konfiguriert ist,
wobei die elektronische Schalterbaugruppe (410) in einem ersten Zustand und einem zweiten Zustand eingerichtet ist, wobei der erste Zustand in Antwort auf ein erstes elektrisches Signal (450) auftritt, das geringer als eine erste Schwelle ist, und der zweite Zustand in Antwort auf ein zweites elektrisches Signal (452) auftritt, das größer als die erste Schwelle ist, wobei im ersten Zustand die elektronische Schalterbaugruppe zum Blockieren des ersten elektrischen Signals vom Passieren durch das elektronische Glockenspiel konfiguriert ist, sodass das elektronische Glockenspiel keinen Benachrichtigungston aussendet, und im zweiten Zustand die elektronische Schalterbaugruppe zum Durchlassen des zweiten elektrischen Signals durch das elektronische Glockenspiel konfiguriert ist, sodass das elektronische Glockenspiel den Benachrichtigungston aussendet; und
wobei das zweite elektrische Signal in Antwort auf Drücken der Taste durch den Besucher auftritt.

2. Türklingelsystem nach Anspruch 1, wobei das elektronische Glockenspiel ein digitales Glockenspiel mit einer ersten gedruckten Schaltplatine umfasst, die konfiguriert ist, den Benachrichtigungston aus dem Lautsprecher auf der Basis von digitalen Musikdaten auszusenden, und wobei die elektronische Türklingel eine zweite gedruckte Schaltplatine umfasst, die konfiguriert ist, das zweite elektrische Signal vom Einlaufen in die zweite elektronische Schaltplatine der elektronischen Türklingel in Antwort auf das Drücken der Taste durch den Besucher zu blockieren.

3. Türklingelsystem nach Anspruch 1, wobei im ersten Zustand die elektronische Schalterbaugruppe konfiguriert ist, das erste elektrische Signal durch die elektronische Schalterbaugruppe passieren zu lassen.

4. Türklingelsystem nach Anspruch 3, wobei die elektronische Schalterbaugruppe mechanisch an das elektronische Glockenspiel gekoppelt ist.

5. Türklingelsystem nach Anspruch 4, wobei das Türklingelsystem ein Kunststoffgehäuse umfasst, und wobei das elektronische Glockenspiel und die elektronische Schalterbaugruppe innerhalb des Kunststoffgehäuses untergebracht sind und die elektronische Türklingel außerhalb des Kunststoffgehäuses und an einem entfernt gelegenen Ort relativ zum Kunststoffgehäuse untergebracht ist.

6. Türklingelsystem nach Anspruch 5, ferner umfassend eine entfernt gelegene Rechnervorrichtung, die zum Empfangen einer vorherbestimmten Zeitlänge von einem Benutzer konfiguriert ist, wobei die vorherbestimmte Zeitlänge eine Zeitlänge definiert, für die das zweite elektrische Signal oberhalb der ersten Schwelle gehalten wird.

7. Türklingelsystem nach Anspruch 6, wobei die elektronische Schalterbaugruppe einen ersten elektronischen Schalter (414a) und einen zweiten elektronischen Schalter (416a), der elektrisch an den ersten elektronischen Schalter (414a) gekoppelt ist, umfasst,
wobei in Antwort auf das erste elektrische Signal: 1) der erste elektronische Schalter konfiguriert wird, das erste elektrische Signal durch die elektronische Schalterbaugruppe fließen zu lassen, und auch konfiguriert wird, das erste elektrische Signal nicht durch das elektronische Glockenspiel fließen zu lassen, und 2) der zweite elektronische Schalter konfiguriert wird, das erste elektrische Signal nicht durch das elektronische Glockenspiel fließen zu lassen, und
wobei in Antwort auf das zweite elektrische Signal der erste und zweite elektronische Schalter konfiguriert werden, das zweite elektrische Signal durch das elektronische Glockenspiel (412) fließen zu lassen.

8. Türklingelsystem nach Anspruch 7, wobei der erste elektronische Schalter einen zweipoligen Einschalter umfasst, und der zweite elektronische Schalter einen einpoligen Einschalter umfasst.

9. Türklingelsystem nach Anspruch 7, wobei, wenn der erste elektronische Schalter in einer ersten Position steht, der erste elektronische Schalter konfiguriert ist, elektrisch den Transformator und die elektronische Türklingel zu verbinden, und wenn der erste elektronische Schalter in einer zweiten Position steht, der erste elektronische Schalter konfiguriert ist, elektrisch den Transformator und das elektronische Glockenspiel zu verbinden, und wobei, wenn der zweite elektronische Schalter in einer offenen Position steht, der zweite elektronische Schalter konfiguriert ist, elektrisch die elektronische Türklingel und das elektronische Glockenspiel zu trennen, und wenn der zweite elektronische Schalter in einer geschlossenen Position steht, der zweite elektronische Schalter konfiguriert ist, elektrisch die elektronische Türklingel und das elektronische Glockenspiel zu verbinden, und wobei, wenn der erste elektronische Schalter in der ersten Position steht, der zweite elektronische Schalter in der offenen Position steht, und wenn der erste elektronische Schalter in der zweiten Position steht, der zweite elektronische Schalter in der geschlossenen Position steht.

10. Türklingelsystem nach Anspruch 7, wobei, wenn der erste elektronische Schalter in einer ersten Position steht, der erste elektronische Schalter konfiguriert ist, elektrisch den Transformator und die elektronische Türklingel zu verbinden, und wenn der erste elektronische Schalter in einer zweiten Position steht, der erste elektronische Schalter konfiguriert ist, elektrisch das elektronische Glockenspiel und die elektronische Türklingel zu verbinden, wobei, wenn der zweite elektronische Schalter in einer offenen Position steht, der zweite elektronische Schalter konfiguriert ist, elektrisch den Transformator und das elektronische Glockenspiel zu trennen, und wenn der zweite elektronische Schalter in einer geschlossenen Position steht, der zweite elektronische Schalter konfiguriert ist, elektrisch den Transformator und das elektronische Glockenspiel zu verbinden, und wobei, wenn der erste elektronische Schalter in der ersten Position steht, der zweite elektronische Schalter in der offenen Position steht, und wenn der erste elektronische Schalter in der zweiten Position steht, der zweite elektronische Schalter in der geschlossenen Position steht.

11. Türklingelsystem nach Anspruch 6, wobei die elektronische Schalterbaugruppe einen ersten elektronischen Schalter (414b), einen zweiten elektronischen Schalter (416b), der elektrisch mit dem ersten elektronischen Schalter (414b) verbunden ist, und einen dritten elektronischen Schalter (418b) umfasst, der elektrisch mit dem ersten und zweiten elektronischen Schalter verbunden ist,
wobei in Antwort auf das erste elektrische Signal: 1) der erste elektronische Schalter konfiguriert wird, das erste elektrische Signal durch die elektronische Schalterbaugruppe fließen zu lassen, und auch konfiguriert wird, das erste elektrische Signal nicht zum elektronischen Glockenspiel fließen zu lassen, und 2) der zweite und dritte elektronische Schalter konfiguriert werden, das erste elektrische Signal nicht zum elektronischen Glockenspiel (412) fließen zu lassen, und
wobei in Antwort auf das zweite elektrische Signal: 1) der erste elektronische Schalter konfiguriert wird, das zweite elektrische Signal nicht durch die elektronische Schalterbaugruppe fließen zu lassen, und 2) der zweite und dritte elektronische Schalter konfiguriert werden, das zweite elektrische Signal durch das elektronische Glockenspiel (412) fließen zu lassen.

12. Türklingelsystem nach Anspruch 11, wobei der erste elektronische Schalter einen ersten einpoligen Einschalter umfasst, der zweite elektronische Schalter einen zweiten einpoligen Einschalter umfasst und der dritte elektronische Schalter einen dritten einpoligen Einschalter umfasst.

13. Türklingelsystem nach Anspruch 11, wobei, wenn der erste elektronische Schalter in einer geschlossenen Position steht, der erste elektronische Schalter konfiguriert ist, elektrisch den Transformator und die elektronische Türklingel zu verbinden, und wenn der erste elektronische Schalter in einer offenen Position steht, der erste elektronische Schalter konfiguriert ist, elektrisch den Transformator und die elektronische Türklingel zu trennen, wobei, wenn der zweite elektronische Schalter in einer geschlossenen Position steht, der zweite elektronische Schalter konfiguriert ist, elektrisch den Transformator und das elektronische Glockenspiel zu verbinden, und wenn der zweite elektronische Schalter in einer offenen Position steht, der zweite elektronische Schalter konfiguriert ist, elektrisch den Transformator und das elektronische Glockenspiel zu trennen, und wobei, wenn der dritte elektronische Schalter in einer geschlossenen Position steht, der dritte elektronische Schalter konfiguriert ist, elektrisch die elektronische Türklingel und das elektronische Glockenspiel zu verbinden, und wenn der dritte elektronische Schalter in einer offenen Position steht, der dritte elektronische Schalter konfiguriert ist, elektrisch die elektronische Türklingel und das elektronische Glockenspiel zu trennen.

14. Türklingelsystem nach Anspruch 12, wobei, wenn der erste elektronische Schalter in der geschlossenen Position steht, der zweite und dritte elektronische Schalter beide in der offenen Position stehen, und wobei, wenn der erste elektronische Schalter in der offenen Position steht, der zweite und dritte elektronische Schalter beide in der geschlossenen Position stehen.

## Revendications

1. Système de sonnette de porte (400), présentant un mode veille, un mode attente et un mode alerte comprenant :
un dispositif informatique à distance comprenant un affichage électronique ;
une sonnette de porte électronique (506) comprenant une caméra et un bouton, dans lequel la caméra est configurée pour détecter visuellement un visiteur et le bouton est configuré pour faire sonner un carillon électronique (412) ;
dans lequel la caméra est désactivée lorsque le système de sonnette de porte est en mode veille, entre en mode attente en réponse à une première indication d'un visiteur étant détecté par la sonnette de porte électronique (506), dans lequel dans le mode attente la caméra est configurée pour débuter un enregistrement, et entre en outre dans le mode alerte en réponse à une seconde indication d'un visiteur étant détecté par la sonnette de porte électronique (506) ;
dans lequel la sonnette de porte électronique (506) enregistre une image en utilisant la caméra durant le mode alerte ;
la caméra comprenant un champ de vision (840) présentant une zone de détection (846), dans lequel le système est configuré pour envoyer une image au dispositif informatique à distance en réponse à une détection du visiteur dans la zone de détection de la caméra, et pour ignorer un visiteur dans le champ de vision de la caméra mais en dehors de la zone de détection en n'envoyant pas l'image au dispositif informatique à distance ;
un ensemble commutateur électronique (410) couplé électriquement à la sonnette de porte électronique (506) et à un transformateur (424) ; et
le carillon électronique (412) couplé électriquement à l'ensemble commutateur électronique (410), dans lequel le carillon électronique (412) comprend un haut-parleur configuré pour émettre un son de notification en réponse au fait que le visiteur presse le bouton (212) de la sonnette de porte électronique,
dans lequel l'ensemble commutateur électronique (410) est agencé dans un premier état et un second état, dans lequel le premier état survient en réponse à une première électricité (450) qui est inférieure à un premier seuil, et le second état survient en réponse à une seconde électricité (452) qui est supérieure au premier seuil, dans lequel dans le premier état l'ensemble commutateur électronique est configuré pour empêcher la première électricité de passer à travers le carillon électronique afin que le carillon électronique n'émette pas de notification sonore, et dans le second état l'ensemble commutateur électronique est configuré pour permettre à la seconde électricité de passer à travers le carillon électronique de telle sorte que le carillon électronique émette la notification sonore ; et
dans lequel la seconde électricité survient en réponse au fait que le visiteur presse le bouton.

2. Système de sonnette de porte selon la revendication 1, dans lequel le carillon électronique comprend un carillon numérique présentant une première carte de circuit imprimé configurée pour émettre le son de notification à partir du haut-parleur sur la base de données de musique numériques, et dans lequel la sonnette de porte électronique comprend une seconde carte de circuit imprimé configurée pour empêcher la seconde électricité d'entrer dans la seconde carte de circuit imprimé de la sonnette de porte électronique en réponse au fait que le visiteur presse le bouton.

3. Système de sonnette de porte selon la revendication 1, dans lequel dans le premier état, l'ensemble commutateur électronique est configuré pour permettre à la première électricité de passer à travers l'ensemble commutateur électronique.

4. Système de sonnette de porte selon la revendication 3, dans lequel l'ensemble commutateur électronique est couplé mécaniquement au carillon électronique.

5. Système de sonnette de porte selon la revendication 4, dans lequel le système de sonnette de porte comprend un boîtier en plastique, et dans lequel le carillon électronique et l'ensemble commutateur électronique sont situés à l'intérieur du boîtier en plastique et la sonnette de porte électronique est située en dehors du boîtier en plastique et dans un emplacement distant par rapport au boîtier en plastique.

6. Système de sonnette de porte selon la revendication 5, comprenant en outre un dispositif informatique à distance configuré pour recevoir une durée prédéterminée de la part d'un utilisateur, dans lequel la durée prédéterminée définit une durée pendant laquelle la seconde électricité est maintenue au-dessus du premier seuil.

7. Système de sonnette de porte selon la revendication 6, dans lequel l'ensemble commutateur électronique comprend un premier commutateur électronique (414a) et un deuxième commutateur électronique (416a) qui est électriquement couplé au premier commutateur électronique (414a),
dans lequel en réponse à la première électricité : 1) le premier commutateur électronique est configuré pour permettre à la première électricité de circuler à travers l'ensemble commutateur électronique et également configuré pour ne pas permettre à la première électricité de circuler à travers le carillon électronique, et 2) le deuxième commutateur électronique est configuré pour ne pas permettre à la première électricité de circuler à travers le carillon électronique, et
dans lequel en réponse à la seconde électricité, les premier et deuxième commutateurs électroniques sont configurés pour permettre à la seconde électricité de circuler à travers le carillon électronique (412).

8. Système de sonnette de porte selon la revendication 7, dans lequel le premier commutateur électronique comprend un commutateur bipolaire unidirectionnel, et le deuxième commutateur électronique comprend un commutateur unipolaire unidirectionnel.

9. Système de sonnette de porte selon la revendication 7, dans lequel lorsque le premier commutateur électronique est dans une première position, le premier commutateur électronique est configuré pour connecter électriquement le transformateur et la sonnette de porte électronique, et lorsque le premier commutateur électronique est dans une seconde position, le premier commutateur électronique est configuré pour connecter électriquement le transformateur et le carillon électronique, et dans lequel lorsque le deuxième commutateur électronique est dans une position ouverte, le deuxième commutateur électronique est configuré pour déconnecter électriquement la sonnette de porte électronique et le carillon électronique, et lorsque le deuxième commutateur électronique est dans une position fermée, le deuxième commutateur électronique est configuré pour connecter électriquement la sonnette de porte électronique et le carillon électronique, et dans lequel lorsque le premier commutateur électronique est dans la première position, le deuxième commutateur électronique est dans la position ouverte, et lorsque le premier commutateur électronique est dans la seconde position, le deuxième commutateur électronique est dans la position fermée.

10. Système de sonnette de porte selon la revendication 7, dans lequel lorsque le premier commutateur électronique est dans une première position, le premier commutateur électronique est configuré pour connecter électriquement le transformateur et la sonnette de porte électronique, et lorsque le premier commutateur électronique est dans une seconde position, le premier commutateur électronique est configuré pour connecter électriquement le carillon électronique et la sonnette de porte électronique, dans lequel lorsque le deuxième commutateur électronique est dans une position ouverte, le deuxième commutateur électronique est configuré pour déconnecter électriquement le transformateur et le carillon électronique, et lorsque le deuxième commutateur électronique est dans une position fermée, le deuxième commutateur électronique est configuré pour connecter électriquement le transformateur et le carillon électronique, et dans lequel lorsque le premier commutateur électronique est dans la première position, le deuxième commutateur électronique est dans la position ouverte, et lorsque le premier commutateur électronique est dans la seconde position, le deuxième commutateur électronique est dans la position fermée.

11. Système de sonnette de porte selon la revendication 6, dans lequel l'ensemble commutateur électronique comprend un premier commutateur électronique (414b), un deuxième commutateur électronique (416b) électriquement connecté au premier commutateur électronique (414b), et un troisième commutateur électronique (418b) électriquement connecté aux premier et deuxième commutateurs électroniques,
dans lequel en réponse à la première électricité : 1) le premier commutateur électronique est configuré pour permettre à la première électricité de circuler à travers l'ensemble commutateur électronique et également configuré pour ne pas permettre à la première électricité de circuler vers le carillon électronique, et 2) les deuxième et troisième commutateurs électroniques sont configurés pour ne pas permettre à la première électricité de circuler vers le carillon électronique (412), et
dans lequel en réponse à la seconde électricité : 1) le premier commutateur électronique est configuré pour ne pas permettre à la seconde électricité de circuler à travers l'ensemble commutateur électronique, et 2) les deuxième et troisième commutateurs électroniques sont configurés pour permettre à la seconde électricité de circuler à travers le carillon électronique (412).

12. Système de sonnette de porte selon la revendication 11, dans lequel le premier commutateur électronique comprend un premier commutateur unipolaire unidirectionnel, et le deuxième commutateur électronique comprend un deuxième commutateur unipolaire unidirectionnel, et le troisième commutateur électronique comprend un troisième commutateur unipolaire unidirectionnel.

13. Système de sonnette de porte selon la revendication 11, dans lequel lorsque le premier commutateur électronique est dans une position fermée, le premier commutateur électronique est configuré pour connecter électriquement le transformateur et la sonnette de porte électronique, et lorsque le premier commutateur électronique est dans une position ouverte, le premier commutateur électronique est configuré pour déconnecter électriquement le transformateur et la sonnette de porte électronique, dans lequel lorsque le deuxième commutateur électronique est dans une position fermée, le deuxième commutateur électronique est configuré pour connecter électriquement le transformateur et le carillon électronique, et lorsque le deuxième commutateur électronique est dans une position ouverte, le deuxième commutateur électronique est configuré pour déconnecter électriquement le transformateur et le carillon électronique, et dans lequel lorsque le troisième commutateur électronique est dans une position fermée, le troisième commutateur électronique est configuré pour connecter électriquement la sonnette de porte électronique et le carillon électronique, et lorsque le troisième commutateur électronique est dans une position ouverte, le troisième commutateur électronique est configuré pour déconnecter électriquement la sonnette de porte électronique et le carillon électronique.

14. Système de sonnette de porte selon la revendication 12, dans lequel lorsque le premier commutateur électronique est dans la position fermée, les deuxième et troisième commutateurs électroniques sont chacun dans la position ouverte, et dans lequel lorsque le premier commutateur électronique est dans la position ouverte, les deuxième et troisième commutateurs électroniques sont chacun dans la position fermée.
